# EUROPEAN PATENT SPECIFICATION

(11) **EP 4 355 964 B1**
(45) Date of publication and mention of the grant of the patent: **23.07.2025**
(21) Application number: 22733430.7
(22) Date of filing: 15.06.2022
(51) Int. Cl.: E04H 6/44, E01F 3/00, B64F 1/22, B64F 1/222

(54) **AERODROME STRUCTURE AND CONSTRUCTION THEREOF**
FLUGPLATZSTRUKTUR UND KONSTRUKTION DAVON
STRUCTURE D'AÉRODROME ET SA CONSTRUCTION

(30) Priority: 15.06.2021 GB 202108526; 14.04.2022 GB 202205587
(43) Date of publication of application: 24.04.2024
(73) Proprietor: Urban Air Port Limited, London EC2R 6PJ (GB)
(72) Inventor: WU-SANDHU, Andrea Fang-Ning, London EC2R 6PJ (GB); JONES, Alan, London EC2R 6PJ (GB); SANDHU, Harpreet Singh, London EC2R 6PJ (GB)
(74) Representative: Boult Wade Tennant LLP
(86) International application number: PCT/EP2022/066310
(87) International publication number: WO 2022/263512

(56) References cited:
- WO-A1-2017/029611
- WO-A1-2018/112635
- WO-A1-2018/139723
- WO-A2-2018/122821
- CN-A- 112 502 508
- US-A- 3 599 809

## Description

### Background

The present disclosure relates to an aerodrome structure and a lift structure for an aerodrome structure, and the construction thereof.

Current transportation systems are increasingly clogged and polluting, with city centres and urban areas frequently overcrowded with conventionally-powered public transport, delivery lorries (trucks), and privately owned vehicles. These conditions are detrimental to the economy and the environment, in particular with regard to particulate pollution and climate change.

These problems may be alleviated to some extent by the use of small, short-range, vertical take-off and landing aircraft, which may be manned or unmanned ("drones"), and which may be used for transportation of people and goods. Such aircraft may be electricallypowered, or comprise hybrid power systems which combine different energy sources, and are therefore more "eco-friendly" than conventional fossil-fuelled aircraft. These kinds of aircraft may also find utility in settings other than towns and cities, for example in humanitarian aid in Disaster Emergency Management, and in military applications.

The flights of these aircraft will need to be effectively and safely managed in controlled airspace by the aviation authorities. Furthermore, the aircraft will require ground infrastructure, for take-off and landing, passenger and cargo handling, charging/refuelling, and so on. The present disclosure aims to address this infrastructure need, in an efficient, flexible, robust, and cost-effective manner.

Also, there is increasing emphasis in the infrastructure sector on sustainability and low environmental impact.

In this context, it may be preferable to work with the landscape rather than to change it.

WO 2018/139723 discloses an unmanned operation system for a vertical take-off and landing unmanned aerial vehicle, the system comprising a confirmation member, a position measurement member, a terrestrial station member, and a remote control unit, such that an unmanned aerial vehicle can be safely protected from external factors such as rain or snow and sunlight when the unmanned aerial vehicle is stored, a battery can be charged or replaced, fuel can be supplied and necessary task equipment can be replaced or freight can be mounted and loaded and unloaded, the unmanned aerial vehicle transmits data to and stores the same in a control member of a terrestrial station and can transmit the same to another device according to a request, position information enabling the unmanned aerial vehicle to take-off and land accurately can be provided, and a flying unmanned aerial vehicle and state information of a surrounding environment can be monitored, and thus an unmanned terrestrial operation system enabling an unmanned aerial vehicle to operate without a pilot can be provided or an unmanned aerial vehicle can be operated by assisting a pilot.

WO 2018/122821 discloses a City Autonomous Airport (CAA) and means to handle autonomously booking of Aero-cars aerial containers reception and parcels delivery according to a specific selected root managed via GPS and controlled path programs. The (CAA) consists of: Terminal 1 to manage passenger's flights via multiple types of Aero-cars through a landing or take-off yards or elevator terminal, and handling aerial containers in the same. Terminal 2 handles the reception of the dropped containers from remotely controlled aircrafts toward elevator inlets to be distributed by pick-up drones to shelves and autonomous ground stations in multiple floors, and handled as aerial parcel sets to delivery drones on top of elevator ends. Terminal 3 is a yard type handling of containers and distributing their parcels content via UAVs. Terminal 4 is managing the operation of the CAA via multiple types of autonomous UAVs, robots... etc.

WO 2018/112635 discloses an apparatus for storing airplanes that includes a first airplane parking floor at a first elevation, a second airplane floor at a second elevation, and an elevator. The first airplane parking floor defines a vacant region within a notional circle circumscribing the first airplane parking floor and defining a notional circumcenter. The first floor is rotatable about the circumcenter for selective angular alignment of one of several first airplane parking floor regions or the vacant region with a fixed sector of the circle. The second airplane parking floor is rotatable, at the second elevation, about the circumcenter for selective angular alignment of one of several second airplane parking floor region with the vacant region. When so aligned, the second airplane parking floor region may be vertically translated by the elevator between the second elevation and the vacant region at the first elevation.

WO 2017/029611 discloses a storage unit for an Unmanned Aerial Vehicle (UAV). The storage unit includes a container, a UAV landing platform, and a receptacle. The container is provided for enclosing the UAV. The receptacle is positioned above the UAV landing platform and it includes at least one inclined surface for guiding a landing UAV to a predetermined UAV landing position on the UAV landing platform.

US 3599809 discloses a self-service multistoried hanger confined within a building having a plurality of circular storage platforms supported therein for independent turning movement in vertically spaced concentric relation adjacent an elevator lift platform; locking means for such building and means for receiving and discharging airplanes to and from selected segmental storage sectors of a selected one of said storage platforms comprising: a. an electrical drive motor drivingly connected to each of said storage platforms; b. an electrical circuit connected to one side of each of said electrical drive motors; c. a coded card indexer connected to the other side of each of said electrical drive motors for controlling the latter to turn a preselected one of said storage platforms and move a selected storage sector thereof into a position for contiguous relation with the elevator platform. d. a commutator having a storage space band in said electrical circuit between said indexer and each of said drive motors and provided with a gap coded to a particular storage sector for each of said storage platforms; e. means on said commutator operatively associated with said indexer and the drive motor of a preselected one of said storage platforms for advancing said commutator in timed relation with the turning of said preselected storage platform and for breaking said electrical circuit at said gap upon arrival of the particular selected storage sector into a position for contiguous relation to said elevator platform; f. a door opening the front wall of such building at ground level adjacent that edge of said elevator platform opposite the storage platforms; g. a door mounted on the front wall of such building for closing the door opening therein; h. a lock on said door for locking the same relative to the opening in said front wall, said lock including a normally open master switch in the main circuit between the source of electrical current and the electrical circuit to said indexer and the drive motors controlled thereby; and i. key means assigned to each tenant to such hangar for unlocking said lock and closing said master switch.

CN 112502508 discloses a helicopter hangar with an automatic lifting apron. The helicopter hangar comprises a parking apron, side walls, a first top plate, a second top plate, a bearing seat, a stepping motor, a planetary gear speed reducer, a connecting plate and the like. Lifting equipment is arranged below the parking apron and can assist the parking apron in moving up and down. The side walls are of a vertical flat plate structure, the number of the side walls is two, the two side walls are arranged on the two sides of the parking apron, each side wall is connected with a connecting plate in a sliding mode, the connecting plates on the two sides are hinged to the first top plate and the second top plate through hinge shafts respectively, and the first top plate is capable of rotating around the hinge shafts of the first top plate. Power equipment is arranged on the connecting plate to assist the first top plate and the second top plate to rotate, the lifting equipment is arranged on the connecting plate to assist the connecting plate to move up and down, a rear garage plate of a vertical plate structure is arranged on the rear sides of the two side walls, the rear garage plate is fixed between the two side walls, and the front side of each side wall is connected with a garage door through a hinge. The hanger has the advantages of being multifunctional, and resource-saving.

### Summary

According to an aspect of the disclosure, there is provided a lift structure for an aerodrome structure, comprising: an upstanding tubular frame comprising an upper ring located over a base ring and supported thereon by columns; a platform located within the tubular frame; and a lift mechanism arranged to raise and lower the platform between the base ring and the upper ring, wherein: the columns are spaced apart from each other to provide a side opening for loading an aircraft onto the platform and unloading an aircraft therefrom when the platform is in a lowered position; and the platform provides a take-off and landing pad for an aircraft when the platform is in a raised position.

As used herein, "aerodrome structure" (or in US English: "airdrome") means a structure or installation from which flight operations take place, including the departure (i.e. take-off) and arrival (i.e. landing) of aircraft and the loading and unloading of passengers and/or cargo. The structure may (or may not) additionally be arranged to accommodate aircraft storage, aircraft maintenance facilities, aircraft refuelling/recharging facilities, passenger accommodation such as a passenger lounge, and air traffic control facilities.

The lift structure forms a core assembly of the aerodrome structure. During in-service operation, the platform of the lift structure enables the loading, unloading, take-off, and landing, of aircraft. As will be explained later herein, the lift structure and its platform also perform a key role in the construction of the aerodrome structure itself, prior to entry into operational service.

The lift structure may comprise base support cross-members located within the base ring and connected thereto, the lift mechanism being located beneath the platform and supported by the base support cross-members.

The platform may comprise discrete first and second platform parts; and the lift mechanism may be arranged to raise and lower the first and second platform parts independently of each other in one mode of operation.

The lift mechanism may be arranged to raise and lower the first and second platform parts together in another mode of operation.

The lift mechanism may comprise at least one chain link lift located beneath the platform.

The lift structure may comprise guide rails extending between the base ring and the upper ring, the platform being movably connected to the guide rails, the lift mechanism being arranged to raise and lower the platform along the guide rails between the base ring and the upper ring.

According to another aspect of the disclosure, there is provided an aerodrome structure, comprising: a lift structure as described herein above; a plurality of anchor members located on the ground around the lift structure; a plurality of radially-extending stabilisation members each comprising a first end connected to the upper ring and a second end connected to a respective one of the anchor members; and a plurality of cladding segments supported by the stabilisation members, each cladding segment spanning a gap between an adjacent pair of the stabilisation members and extending between the upper ring and the second ends of said adjacent pair of the stabilisation members, thereby to define a covered interior volume of the aerodrome structure.

The interior volume (i.e. internal space) may be segmented or partitioned to host multiple capabilities that contribute to the overall role of the aerodrome structure.

Each of the cladding segments may comprise a fabric material.

The fabric material may comprise PVC-coated polyester.

One or more of: the base ring; the platform; the guide rails; the upper ring; the columns; and the stabilisation members, may comprise aluminium alloy or steel.

The aerodrome structure may comprise a hanger structure for accommodating at least one aircraft and located adjacent to the side opening, for loading an aircraft onto the platform and unloading an aircraft from the platform when the platform is in the lowered position.

The hanger structure may comprise hanger structure roof members connected to the upper ring and upstanding hanger structure columns connected to the hanger structure roof members and to respective ones of the anchor members.

The anchor members may be configured to be height adjustable in order to position the second ends of the stabilisation members at the same height as each other from a ground datum.

According to another aspect of the disclosure, there is provided a method of constructing the aerodrome structure described herein above, the method comprising: providing the base ring on the ground; providing the lift mechanism within the base ring; attaching the platform to the lift mechanism such that the platform is located above the lift mechanism; providing the upper ring on the platform; pivotably connecting first ends of the columns to the upper ring such that the columns are in spaced relationship with each other around the upper ring and extend radially from the upper ring toward the ground; pivotably connecting the first ends of the stabilisation members to the upper ring such that the stabilisation members are in spaced relationship with each other around the upper ring and extend radially from the upper ring toward the ground; activating the lift mechanism in order to raise the platform and thus the upper ring located thereon, thereby to draw the pivotably connected columns into a substantially vertical condition and the pivotably connected stabilisation members into an inclined condition with respect to the ground; locking the first ends of the columns and the first ends of the stabilisation members into fixed relationship with the upper ring; connecting second ends of the columns to the base ring so as to be in fixed relationship therewith; providing the anchor members on the ground and connecting the second ends of the stabilisation members to the respective anchor members so as to be in fixed relationship therewith; and attaching the cladding segments to the stabilisation members.

Due especially to the provision and configuration of the height-adjustable platform, the lift structure is an essentially self-erecting structure, which additionally enables the erection of other parts of the aerodrome structure. That is, the need for cranes or other heavy lifting equipment is eliminated. Thus, the platform has a dual function: firstly, it enables the construction of the aerodrome structure; and secondly, it serves as an in-service aircraft handling platform for loading, unloading, take-off, and landing. This dual-function aspect makes the aerodrome structure highly efficient in terms of its construction and operation.

The method of constructing the aerodrome structure may comprise adjusting the height of one or more of the anchor members in order to position the second ends of the stabilisation members at the same height as each other from a ground datum.

The method of constructing the aerodrome structure may comprise: before activating the lift mechanism in order to raise the platform, connecting first ends of guide rails to the base ring such that the guide rails extend upwardly from the base ring and are in spaced relationship with each other around the base ring and the platform; and connecting the guide rails to the platform such as to allow height adjustment of the platform relative to the guide rails.

The method of constructing the aerodrome structure may comprise: after activating the lift mechanism in order to raise the platform, connecting second ends of the guide rails to the upper ring so as to be in fixed relationship therewith.

The method of constructing the aerodrome structure may comprise assembling one or more of: the base ring; the platform; the guide rails; the upper ring; the columns; and the stabilisation members, from a plurality of discrete component parts.

According to another aspect of the disclosure, there is provided a kit of parts for the lift structure described herein above, comprising: a set of ring segments configured to be connected together to form the base ring; a set of ring segments configured to be connected together to form the upper ring; a plurality of sets of column segments, the segments of each set of column segments being configured to be connected together to form one of the columns, one of the segments in each set of column segments being configured to be connected to the base ring and another of the segments in each set of column segments being configured to be connected to the upper ring; a set of platform segments configured to be connected together to form the platform; and a lift mechanism configured to be connected to the platform.

The kit of parts may comprise a plurality of sets of guide rail segments, the segments of each set of guide rail segments being configured to be connected together to form one of the guide rails, one of the segments in each set of guide rail segments being configured to be connected to the base ring, each of the guide rails being configured to be connected to the platform.

According to another aspect of the disclosure, there is provided a kit of parts for the aerodrome structure described herein above, comprising: the kit of parts for the lift structure described herein above; a plurality of the anchor members; a plurality of sets of stabilisation member segments, the segments of each set of stabilisation member segments being configured to be connected together to form one of the stabilisation members, at least one of the segments in each set of stabilisation member segments being configured to be connected to the upper ring and another of the segments in each set of stabilisation member segments being configured to be connected to a respective one of the anchor members; and a plurality of the cladding segments.

Thus the inventive aerodrome structure uses a design philosophy encompassing a lightweight, rapidly deployable structure that comes as a contained (e.g. flat-packed) kit of parts, which can be constructed and deconstructed with minimal personnel and equipment.

The parts are pre-designed / pre-engineered / pre-fabricated for inclusion in the structure, which is modular and scalable.

In its stored (flat-packed) state the aerodrome structure has the ability to be transported (via land, sea or air) in a set of conventional haulage containers. This provides for a geographically-reusable "pop-up" infrastructure that can be positioned in either a rural, urban or city location, either at ground level or on top of a building. As a scalable, adaptable structural framework and foot print, it has a transformation capability that matches the needs of its role and the environment in which it is situated.

As drop-off and pick-up points, the operational flexibility of the aerodrome structure can ensure that Urban Air Mobility (UAM) air corridors are supplemented with safe and effective landing zones that will meet future urban aviation demands dictated by society and industry; whether there is a need to re-deploy due to population catchment changes, expanding urban environments, industrial relocations, or humanitarian aid.

In a further aspect of the disclosure, there is provided a foot for supporting a piece of infrastructure, the foot comprising:
a platform having a first portion, a second portion and a central portion between the first portion and the second portion;
a first base, configured to support the first portion of the platform via at least a first four rods that each extend between the first base and the first portion to an independently separately adjustable extent;
a second base, configured to support the second portion of the platform via at least a second four rods that each extend between the second base and the second portion to an independently adjustable extent;
a first pair of legs projecting upwards from the first portion of the platform;
a second pair of legs projecting upwards from the second portion of the platform;
a beam having a first end and a second end, wherein the first end is supported by the first pair of legs and the second end is supported by the second pair of legs;
wherein:
   adjustment of the extent to which the first four rods extend between the first base and the first portion and adjustment of the extent to which the second four rods extend between the second base and the second portion enables adjustment of the platform so as to be horizontal when the first base is non-horizontal and when the second base is both non-horizontal and non-parallel with the first base;
   the first pair of legs comprises a first range of attachment positions for supporting the beam at a first variety of vertical positions and the second pair of legs comprises a second range of attachment positions for supporting the beam at a second variety of vertical positions that correspond with the first variety of vertical positions, such that a height of the beam is selectable by selecting one of the first variety of vertical positions and a corresponding one of the second variety of vertical positions and such that the beam is parallel to the platform.

This allows for rapid deployment of the foot for rapid construction of infrastructure in a range of settings without the requirement to alter the landscape, or to undertake piling operations or to pour concrete.

In this way, the foot may be particularly appropriate for non-permanent structures or structures deployed rapidly, such as in disaster areas.

The foot may alternatively be termed a terrain adjustable foundation.

One particular application of the foot may be for use in supporting a structure configured for use as an airport for vertical take off and landing aircraft.

The first pair of legs may comprise a first leg and a second leg, wherein the first leg and the second leg are mutually parallel. The second pair of legs may comprise a third leg and a fourth leg, wherein the third leg and the fourth leg are mutually parallel.

The first pair of legs may be parallel to the second pair of legs.

The first pair of legs may project upwards from the first portion of the platform entirely within a first area defined by a first boundary that links the first four rods; and the second pair of legs may project upwards from the second portion of the platform entirely within a second area defined by a second boundary that links the second four rods.

The first four rods may be symmetrically disposed relative to the first base and the second four rods may be symmetrically disposed relative to the second base.

The first pair of legs may be symmetrically disposed relative to the first base and the second pair of legs may be symmetrically disposed relative to the second base.

In this way, stability of the foot may be increased.

A lower surface of the first base and a lower surface of the second base each comprise a material having a coefficient of friction that exceeds a friction threshold.

In this way, a risk of lateral slippage of the foot is reduced.

In a further aspect of the disclosure there is provided an assembly comprising a pair of feet, wherein each foot is in accordance with a foot of the disclosure. The assembly further comprises:
a connecting shaft extending between the beam of the first foot and the beam of the second foot:
wherein by adjustment of the first four rods and the second four rods of the first foot, and by adjustment of the first four rods and the second four rods of the second foot, the platforms of the first and second feet are mutually parallel, and
wherein by appropriate selection of the first and second range of attachment positions for the first foot and by appropriate selection of the first and second range of attachment positions for the second foot, the beam is supported horizontally.

In this way, an assembly may maintain horizontality when each of the two feet is placed on separately inclined surfaces.

Fine adjustment to achieve horizontality of the beam may be achievable by further adjustment of the extent to which the first four rods extend between the first base and the first portion and by further adjustment of the extent to which the second four rods extend between the second base and the second portion.

In this way, the expectation of horizontality not just for a single foot, but across the assembly having more than one foot, may be increased.

In a further aspect of the disclosure there is provided a structure comprising a plurality of pairs of feet as already described, and a plurality of connecting shafts, wherein each pair of feet of the plurality of pairs of feet is connected to each adjacent pair of feet by a connecting shaft of the plurality of connecting shafts.

In this way, a building having a horizontal floor may be rapidly constructed on uneven ground.

In a further aspect of the disclosure there is provided a structure having a polygon plan view shape having N sides, comprising N feet in accordance with the disclosure and N connecting shafts.

All of the N connecting shafts may sit in a first horizontal plane.

A floor of the structure may be supported in the first horizontal plane.

The structure may further comprise a plurality of roof members, wherein the beam of each of the plurality of feet supports a roof member and the plurality of roof members extend radially towards a central area of the structure.

A central area of the structure may comprise a ring portion within which is located a platform for vertical take off and landing aircraft.

Any apparatus, system, or structural feature described herein may be provided as a method feature, and vice versa. Moreover, it will be understood that the present disclosure is described herein purely by way of example, and modifications of detail can be made within the scope of the claims. Furthermore, it will be understood by the skilled person that particular combinations of the various features described and defined herein may be implemented and/or supplied and/or used independently. In particular, it will be understood by the skilled person that any feature described in relation to a particular aspect herein may also be applied to another aspect described herein, in any appropriate combination.

### Further aspects of the disclosure

### Brief description of the drawings

Figures 1 and 2 show an aerodrome structure according to the disclosure;
Figures 3a-c and 4 show portions of some component parts of the aerodrome structure;
Figures 5 to 7 show a construction sequence of the aerodrome structure;
Figures 8 and 9 relate to cladding which is disposed on the aerodrome structure;
Figures 10 and 11 show window features of the aerodrome structure;
Figures 12 and 13 relate to a lift apparatus of the aerodrome structure;
Figure 14 shows ground support features of the aerodrome structure;
Figure 15 shows another configuration of window features of the aerodrome structure.
Figure 16 shows a first embodiment of a foot in accordance with the present disclosure;
Figure 17 shows the foot of Figure 16 with ballast portions;
Figure 18 shows the foot of Figure 16 from a different perspective;
Figure 19 shows a cross sectional view of the foot of Figure 16 when place on uneven ground;
Figure 20 shows a cross sectional view of the foot of Figure 16 when placed on uneven ground with the ground at a lower level than as shown in Figure 19;
Figure 21 shows a side view of a building, specifically an air port for vertical take off and landing vehicles, that makes use of the feet of Figure 16;
Figure 22 shows a plan view of the building of Figure 21.

### Detailed description

### Aerodrome Structure

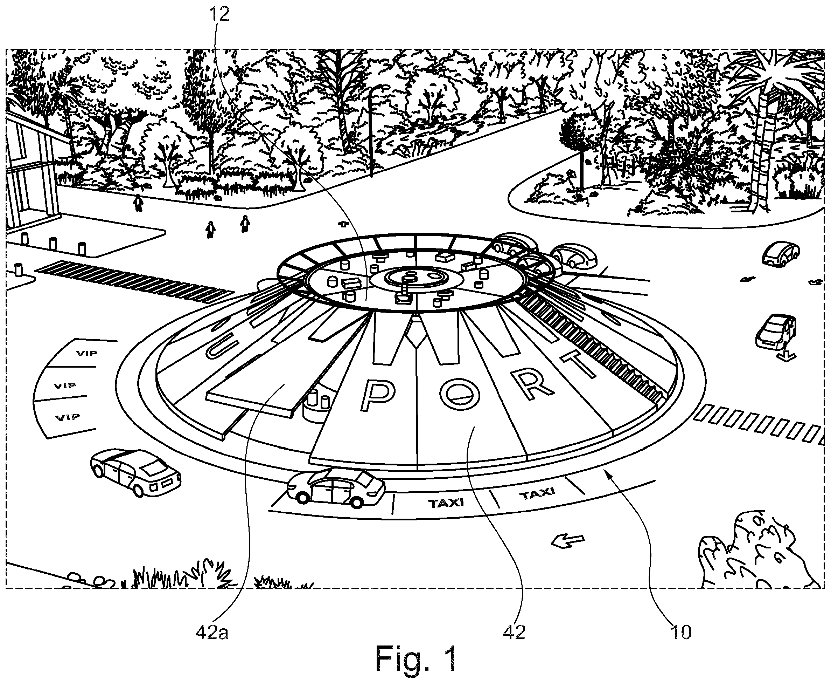

Referring to Figure 1, an aerodrome structure 10 or installation according to the disclosure has the form of a shallow, truncated cone. The aerodrome structure 10 includes a platform 12 arranged to be raised and lowered, between the ground within the interior of the aerodrome structure 10 and an upper region or top of the aerodrome structure 10 (per the position of the platform 12 shown in Figure 1). With regard to departing aircraft, the platform 12 functions to move the aircraft from ground level to the top of the aerodrome structure 10 and provides a take-off pad for the aircraft. With regard to arriving aircraft, the platform 12 provides a landing pad and serves to move the aircraft from the top of the aerodrome structure 10 to ground level.

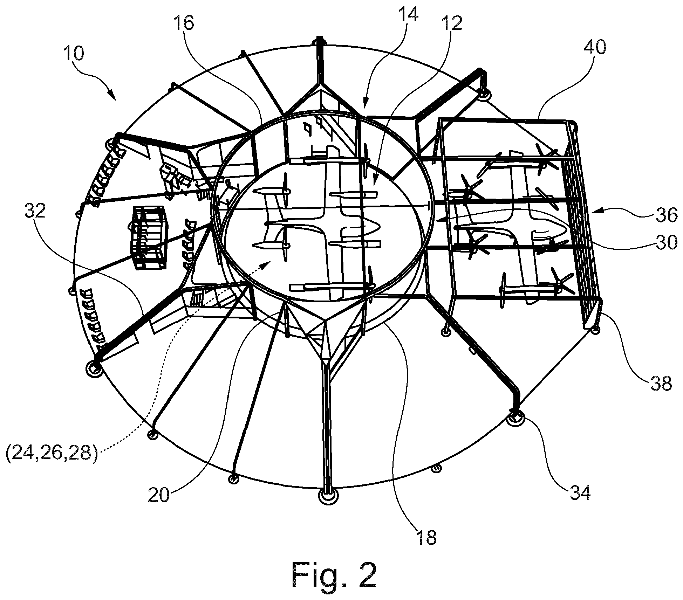

As can be seen in Figure 2, the platform 12 is one element of a lift structure 14 which forms a central, core assembly of the aerodrome structure 10. As will be explained herein, the lift structure 14 and its platform 12 enables the construction of the aerodrome structure 10 itself, as well as handling the movements of aircraft when the aerodrome structure 10 is in-service.

The lift structure 14 comprises an upstanding tubular frame including an upper ring 16 located directly above a lower or base ring 18 which lies on the ground. The upper ring 16 is supported over the base ring 18 by a plurality of substantially vertical lift structure columns 20 which are spaced apart from each other around the circumference of the upper and base rings 16, 18. In this example, the lift structure comprises eight lift structure columns 20. In this example, the lift structure columns 20 comprise steel. In this example, the upper and base rings 16, 18 comprise steel.

The platform 12 is disc-shaped and is located within the tubular frame and extends laterally or horizontally, i.e. in a direction which is substantially perpendicular with the longitudinal or vertical axis of the tubular frame. The platform 12 has a diameter or span which is slightly smaller than that of the base ring 18 and the upper ring 16. In this example, the platform 12 comprises aluminium alloy. The platform 12 is movably connected to guide rails 22 (not shown in Figure 2) which extend between the base ring 18 and the upper ring 16 and which are spaced apart around the circumference thereof. In this example, the lift structure 14 comprises four guide rails 22. In this example, the guide rails 22 comprise steel.

Lift apparatus 24 (not visible in Figure 2) is provided beneath the platform 12 (i.e. between the platform 12 and the underlying ground) and is arranged to raise and lower the platform 12 between the base ring 18 and the upper ring 16. In this example, the lift apparatus 24 is supported on rest plates 26 (not visible in Figure 2) which are arranged within the circumference of the base ring 18. Further in this example, the rest plates 26 are themselves supported on or between ground-based base cross-beams 28 (not visible in Figure 2) which extend across the diameter of the base ring 18 and are connected thereto. In this example, the base cross-beams 28 comprise steel.

The spacing of the lift structure columns 20 and the guide rails 22 is configured such as to provide a side opening 30 of the lift structure 14, for loading an aircraft onto the platform 12 and unloading an aircraft from the platform 12 when the platform 12 is in a lowered position, i.e. such as to be located in the region of the base ring 18. When the platform 12 is in a raised position, i.e. such so as to be located in the region of the upper ring 16, the platform 12 provides a take-off and landing pad for an aircraft. Thus the platform 12 may also be referred to as a Final Approach and Take-Off or "FATO" platform. As such, the platform 12 is configured to meet relevant aviation regulations. In this regard, the platform 12 comprises appropriate markings, navigation lighting and equipment, and a surface material which is non-slip, durable, and corrosion resistant.

Still referring to Figure 2, the aerodrome structure 10 further comprises Y-shaped outriggers or stabilisation beams 32, which provide enhanced lateral stabilisation to the lift structure 14 and also form an additional structure of the aerodrome structure 10. In this example, the aerodrome structure 10 comprises six of the beams 32. In this example, the beams 32 comprise steel. As can be seen in the drawing, the Y-shaped stabilisation beams 32 slope downwardly and outwardly away from the lift structure 14. The two inner ends of each Y-shaped stabilisation beam 32 are fixedly connected to the upper ring 16, in particular at the same portions of the upper ring 16 to which a respective two of the lift structure columns are fixedly connected. The outer end of each Y-shaped stabilisation beam 32 is fixedly connected to a respective anchor member 34 which is in contact with the ground. An outer portion of the beam 32 which includes said outer end is cranked downwardly, i.e. the beam 32 changes in plane in side profile, such as to be inclined from the ground at a greater angle than is the mid-portion of the beam 32.

The aerodrome structure 10 further comprises a hanger structure 36 for accommodating aircraft entering and leaving the platform 12. The hanger structure 36 comprises a plurality of upstanding hanger structure columns 38 which are fixedly connected to a plurality of hanger structure roof members 40, ends of some of the hanger structure roof members 40 being fixedly connected to the upper ring 16 of the lift structure 14. An outer region of the hanger structure (i.e. to the right-hand side in the sense of Figure 2) includes an entrance/exit for aircraft to enter/leave the aerodrome structure 10.

Referring again to Figure 1, the aerodrome structure 10 further comprises an outer covering or cladding which is attached to the Y-shaped stabilisation beams 32 and defines a covered inner volume of the aerodrome structure 10. The cladding comprises a plurality of cladding segments 42, each of the segments spanning a space between an adjacent pair of the Y-shaped stabilisation beams. In this example, the cladding segments 42 comprise a fabric material, more particularly a PVC-coated polyester.

In this example: the aerodrome structure 10 has a height at the upper ring 16 of about 7.3 m and the upper ring 16 has a diameter of about 17.4 m; the platform 12 has a diameter of about 17 m; each of the Y-shaped stabilisation beams 32 has a length of about 12 m.

The aerodrome structure 10 is most suitable for vertical take-off and landing (VTOL) aircraft. That is, aircraft that can hover, take off, and land vertically. This includes various kinds of aircraft, including rotary-wing aircraft, i.e. helicopters, and other aircraft with powered rotors, such as cyclogyros, cyclocopters and tiltrotors. Also included are VTOL aircraft that may operate in other modes, e.g. STOL (short take-off and landing), or STOVL (short take-off and vertical landing), and lighter-than-air aircraft. The aircraft may be manned or unmanned ("drones" or UAVs). The aircraft may carry passengers or cargo, or both. In some applications, the aircraft may carry humanitarian aid supplies, or military equipment such as weaponry. The aircraft may be powered by electricity, fossil-fuels, or a combination of these.

The aerodrome structure 10 or installation may comprise its own supply of electrical power, for example by means of wind, solar or hydro, or alternatively may rely on an external supply, for example from the mains grid where the aerodrome structure 10 is located. Whatever the supply source, the aerodrome structure 10 or installation may be arranged to store electrical power, for example using batteries. Excess stored electricity may be fed into the mains grid, if desired. The electrical energy may be used to recharge electricallypowered aircraft which use the aerodrome structure 10. Furthermore, the aerodrome structure 10 may include storage facilities for fossil fuels or hydrogen, in order to be able to refuel aircraft using those fuels.

### Assembly

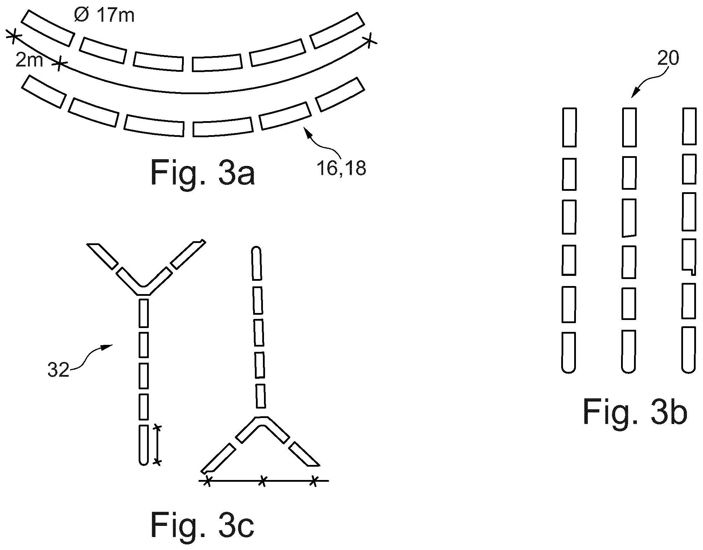

The aerodrome structure 10 is constructed from its component parts which are originally packaged in containers, for example standard-size shipping containers, for convenient deployment to the site where the aerodrome structure 10 is to be erected. Some examples of the component parts of the lift structure 14 are shown in Figures 3a-c, in particular the upper and base rings 16, 18 (see Figure 3a), the lift structure columns 20 (see Figure 3b), and the Y-shaped stabilisation beams 32 (see Figure 3c). As can be seen in the drawings, in this example each of these component parts, as well as some or all of the other component parts of the aerodrome structure 10, comprises a plurality of discrete segments or elements which are configured to be connected or joined together in order to form the parts. In this example, the elements each have a length of about two metres.

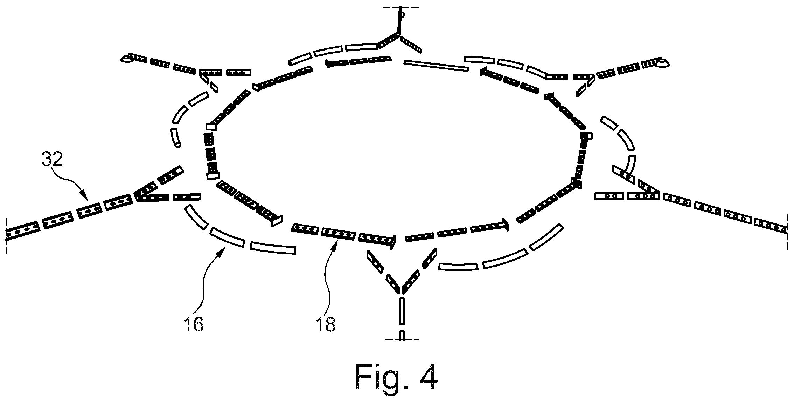

The construction or assembly of the aerodrome structure 10 will now be described, with particular reference to Figures 4 to 6.

Referring to Figure 4, the elements of the component parts of the aerodrome structure 10 are taken from their containers and arranged on the ground at the construction site. The elements of some of the component parts are then connected together in order to form the individual component parts (not all of which are shown in Figure 4). Thus, in this example, the relevant elements are connected together to first form the base ring 16, the lift structure columns 20, the base cross-beams 28, the Y-shaped stabilisation beams 32, the hanger structure columns 38, and the hanger structure roof members 40. Furthermore, ends of the hanger structure columns 38 are hingedly or pivotably connected to respective ends of the hanger structure roof members 40 in order to pre-assemble the hanger structure 36.

The base cross-beams 28 are placed on the ground inside the circumference of the base ring 18 and their ends are attached to respective portions of the base ring 18. The rest plates 26 are mounted on or between the base cross-beams 28. The lift apparatus 24 is mounted on the rest plates 26.

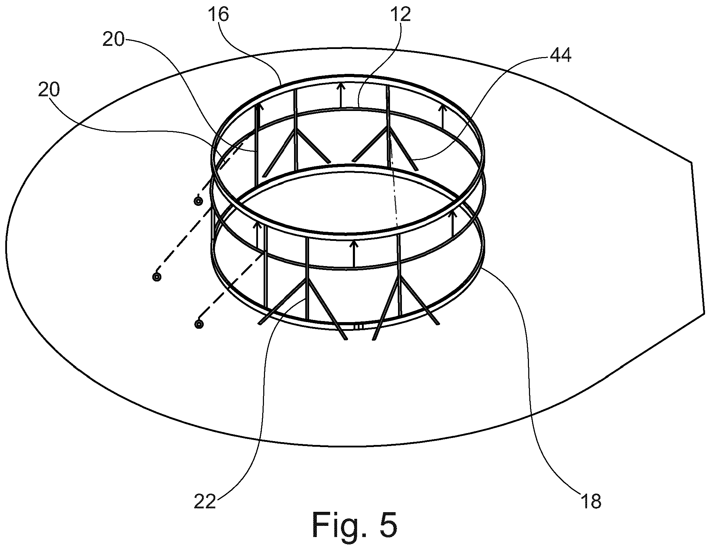

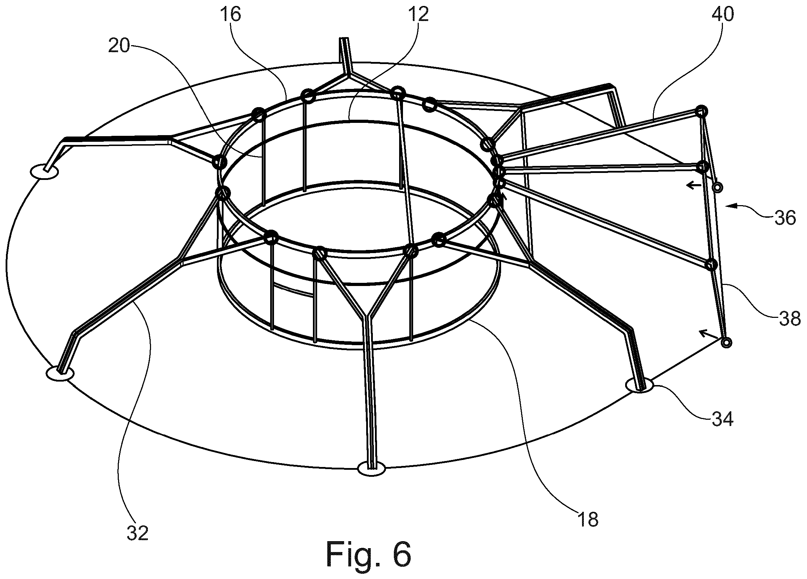

Referring to Figures 5 and 6, each segment of the platform 12 (only the outer circumference of which is shown in the drawings) is positioned over the lift apparatus 24 (not shown) and is attached thereto. The segments of the platform 12 are connected together, either before or after attachment to the lift apparatus 24. Thus, the platform 12 is positioned and supported slightly above the level of the base ring 18.

The elements of the guide rails 22 are assembled and the guide rails 22 are raised into an upright position and their lower ends are fixedly attached to the base ring 18. Alternatively, the elements of the guide rails 22 may be connected one on top of another such as to build the guide rails 22 up in the vertical direction from the base ring 18. Preferably, temporary stabilisation struts 44 are attached to the outer surfaces of the guide rails 22 in order to provide additional lateral stabilisation during assembly. Thus, the guide rails 22 extend vertically from the base ring 18 and surround or encircle the platform 12. Preferably, the outer edge of the platform 12 includes radially-extending projections which are received in channels provided in the inner surfaces of the guide rails 22, thereby to engage the platform 12 with the guide rails 22 and prevent rotational movement of the platform 12 with respect to the guide rails 22, which themselves provide improved lateral stability..

The segments of the upper ring 16 are positioned on the platform 12 and connected together to form the upper ring 16. Since the diameter of the upper ring 16 is slightly greater than the diameter of the platform 12, at least one temporary cross-member may be attached to the upper ring 16 such as to extend between opposing portions of the upper ring 16, in order to support the upper ring 16 on the platform 12. Alternatively, the same supporting effect may be achieved by attaching a temporary inner lip part to the upper ring 16, such that the underside of the inner lip rests on the radially-outer part of the platform 12.

With the upper ring 16 assembled and rested on the platform 12, the lift structure columns 20 are arranged in spaced-relationship with each other around the circumference of the upper ring 16 so as to project radially therefrom. The inner ends of the lift structure columns 20 are hingedly or pivotably connected to the upper ring 16, while the outer ends of the lift structure columns 20 are rested on the ground. Thus, the lift structure columns 20 slope downwardly from the upper ring 16 to the ground (as depicted by the dashed lines of the lift structure columns 20 in Figure 5).

In a similar manner, the Y-shaped stabilisation beams 32 (not shown in Figure 5) are arranged in spaced-relationship with each other around the circumference of the upper ring 16 so as to project radially therefrom. The inner ends of each Y-shaped stabilisation beam 32 are hingedly or pivotably connected to the upper ring 16, at the same portions of the upper ring 16 to which a respective two of the lift structure columns are hingedly or pivotably connected, while the outer end of each Y-shaped stabilisation beam 32 is rested on the ground. Thus, the Y-shaped stabilisation beams 32 slope downwardly from the upper ring 16 to the ground.

Free ends of the hanger structure roof members 40 of the pre-assembled hanger structure 36 (not shown in Figure 5) are hingedly or pivotably connected to the upper ring 16. Furthermore, the hanger structure columns 38 (which it will be recalled are hingedly or pivotably connected to the other ends of the respective hanger structure roof members 40) are extended radially outward so as to lie in a generally straight line with the hanger structure roof members 40). Thus, the hanger structure roof members 40 and the hanger structure columns 38 slope downwardly from the upper ring 16 to the ground.

The lift apparatus 24 is activated in order to raise the platform 12, and thereby the upper ring 16 which rests on the platform 12, vertically upward. The upstanding guide rails 22 serve to guide the platform 12 in its upward motion. As the upper ring 16 ascends with the platform 12, the pivotably-connected lift structure columns 20 freely rotate in a plane which is perpendicular with the plane of the upper ring 16. Thus, the lift structure columns 20 are drawn upward and inward, their inclination relative to the ground progressively increasing until they reach a substantially vertical condition. Preferably, the outer ends of the lift structure columns 20 are equipped with castor wheels to facilitate their inward travel over the ground.

In a similar manner, the Y-shaped stabilisation beams 32 (which are of greater length than the lift structure columns 20) are also drawn upward and inward during the upward motion of the platform 12 and the upper ring 16, their inclination relative to the ground also progressively increasing until they reach an inclination angle of around 45 degrees, in this example. Preferably, the outer ends of the Y-shaped stabilisation beams 32 are equipped with castor wheels to facilitate their inward travel over the ground.

Also in a similar manner, the hanger structure roof members 40 and the hanger structure columns 38 are drawn upward and inward during the upward motion of the platform 12 and the upper ring 16, their inclination relative to the ground also progressively increasing. The inclination of the hanger structure columns 38 may be manually adjusted during (or after) the rise of the platform 12, in order to set the desired final inclination of the hanger structure roof members 40 relative to the ground. For example, the hanger structure columns 38 may be set at an inclination of about 90 degrees, i.e. substantially vertical, and the hanger structure roof members 40 at an inclination of zero degrees, i.e. substantially horizontal. Preferably, the outer ends of the hanger structure columns 38 are equipped with castor wheels to facilitate their inward travel over the ground.

The lift apparatus 24 is deactivated in order to halt the upward movement of the platform 12. Thus, the platform 12 is used to raise the upper ring 16, the hanger structure columns 38, the Y-shaped stabilisation beams 32, and the hanger structure 36, into position.

If fitted, the castor wheels are removed from the lift structure columns 20, the Y-shaped stabilisation beams 32 and the hanger structure columns 38. The lift structure columns 20, the Y-shaped stabilisation beams 32, and the hanger structure roof members 40, are locked in place, such as to transition from the pivotable relationship with the upper ring 16 to a fixed relationship therewith. Locking may be achieved manually, for example by a bolted connection, or automatically, for example by a spring-loaded locking mechanism provided at the interface with the upper ring 16. Self-locking mechanisms are commonly found in space-frame constructions, for example, with which the person skilled in the general art of construction will be familiar. Similarly, the hanger structure roof members 40 are locked in place relative to the hanger structure columns 38.

The lower ends (i.e. the aforementioned outer ends) of the lift structure columns 20 are fixedly connected to the base ring 18. In this way, the lift structure columns 20 provide a rigid connection between the upper and base rings 16, 18. In a similar manner, the upper ends of the guide rails 22 are rigidly connected to the upper ring 16 in order to provide additional structural rigidity to the upstanding tubular frame.

The outer ends of the Y-shaped stabilisation beams 32 are connected to their respective anchor members 34, which are provided on the ground, thereby enhancing lateral stability. The anchor members 34 may be placed on the ground in pre-determined positions prior to the upward and inward movement of the Y-shaped stabilisation beams 32, or alternatively put in place after said movement according to the final positions of the outer ends of the beams 32.

The temporary stabilisation struts 44 attached to the outer surfaces of the guide rails 22 are no longer required and are therefore removed. With the upper ring 16 thus fixed firmly in place, the temporary cross-member (or the temporary inner lip part) (not shown in the drawings) is also no longer needed and is therefore removed from the upper ring 16.

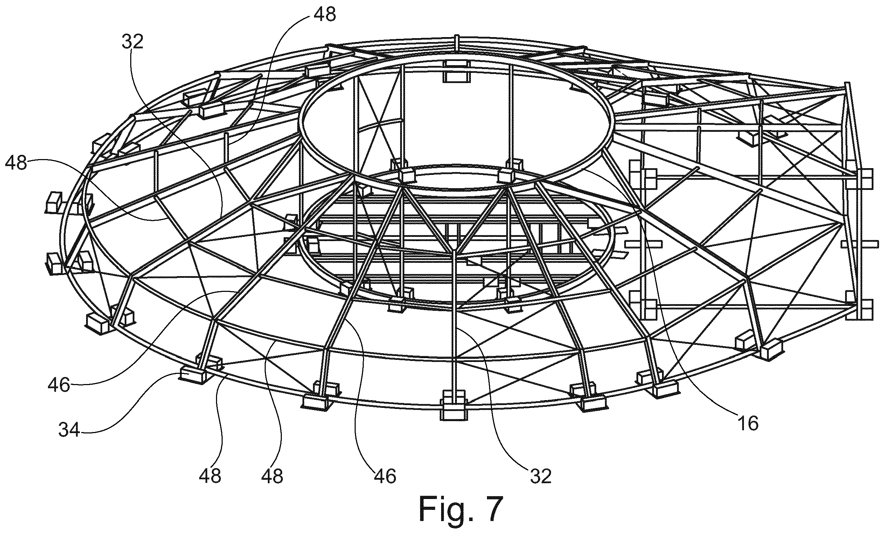

Referring to Figure 7, in this example the aerodrome structure 10 comprises additional outriggers or stabilisation beams 46 which are disposed between the Y-shaped stabilisation beams 32. The additional stabilisation beams 46 comprise steel. An inner end of each additional stabilisation beam 46 is connected to the upper ring 16, while the outer end is connected to a respective additional supporting anchor member 34. Thus the additional stabilisation beams 46 slope downwardly and outwardly away from the lift structure 14, in a similar manner to the Y-shaped stabilisation beams 32. Furthermore, the side profile of the additional stabilisation beams 46 is similar to that of the Y-shaped stabilisation beams 32, including the downwardly-cranked outer portion. The additional stabilisation beams 46 are erected in the same manner as the Y-shaped stabilisation beams 32, i.e. the beams 46 are hingedly or pivotably attached to the upper ring 16, raised into the elevated position by the platform 12, and locked in place relative to the upper ring 16 once in the elevated position.

Also as shown in Figure 7, in this example the aerodrome structure 10 comprises horizontally-arranged bracing members 48 which connect adjacent pairs of the Y-shaped stabilisation beams 32 and the additional stabilisation beams 46. The bracing members 48 may comprise steel. The bracing members 48 are connected to the beams 32, 46 after the beams 32, 46 have been placed into position as described herein above. In this example, the bracing members 48 form three rings which each extend circumferentially around the aerodrome structure 10, the rings being located at an upper region, a lower region, and a mid-region of the aerodrome structure 10. It will be understood that the bracing members 48 provide the aerodrome structure 10 with additional structural rigidity.

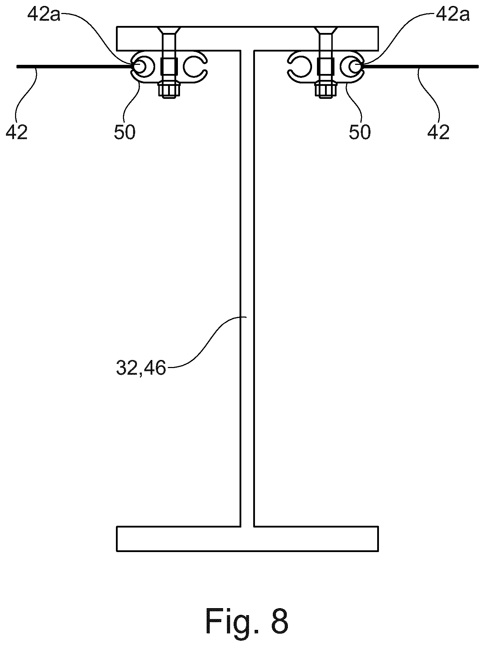

Referring next to Figure 8, the Y-shaped stabilisation beams 32 and the additional stabilisation beams 46 provide a means of support for the cladding segments 42 which generally cover the aerodrome structure 10. More particularly, each of the Y-shaped stabilisation beams 32 and the additional stabilisation beams 46 is I-shaped in cross-section and twin luff tracks 50 or elongate channels are provided on the top of the flange parts of the beam 46. Each of the luff tracks 50 is configured to receive an edge of one of the cladding sections 42, the edge including a thickened keeper portion 42a for retaining the edge in the luff track 50.

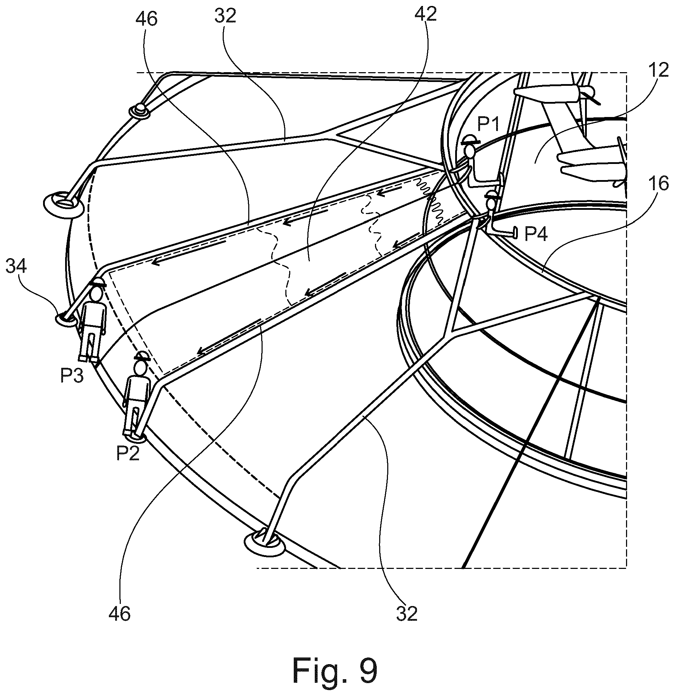

The installation of the cladding segments 42 is shown in Figure 9. During installation, the platform 12 is raised to the upper ring 16. As mentioned herein above, each of the cladding segments 42 comprises a PVC-coated polyester material. Two personnel P1, P4 on the platform 12 feed the keeper portions 42a of opposing edges of a strip of the material, i.e. one cladding segment 42, into the upper ends of the luff tracks 50 provided on adjacent additional stabilisation beams 46. The end of the cladding segment 42 is pulled outward and downward by two further personnel P2, P3 on the ground, for example using a winch and a cable attached to the end of the strip. Thus the cladding segment 42 is drawn through the luff tracks 50 so as to extend from the upper ring 16 to the outer ends of the beams 46 at the ground, thereby spanning the gap between the two adjacent beams 46.

Each cladding segment 42 is preferably held in tension in order to prevent sagging. The tension may be provided by a weighted portion of the outer/lower end of the cladding segment 42. Sagging may also be prevented by positioning the cladding segments 42 so that they overlie the bracing members 48, such that the bracing members 48 resist downward movement of the cladding segments 42.

All of the cladding segments 42 are installed in this way (some between adjacent pairs of the additional stabilisation beams 46 (as shown in Figure 9) and others between adjacent additional stabilisation beams 46 and Y-shaped stabilisation beams 32), so that the cladding generally covers the aerodrome structure 10 from its top to its base. Thus, the Y-shaped stabilisation beams 32 and the additional stabilisation beams 46 function as structural roof members for supporting the cladding segments 42, as well as providing enhanced lateral stability for the lift structure 14.

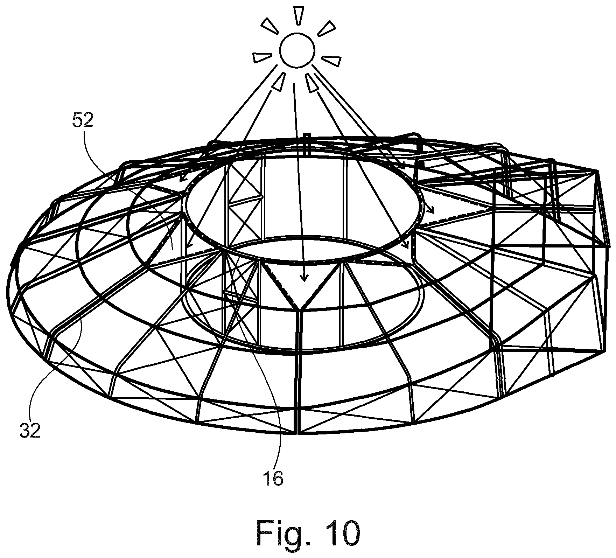

In this example, the cladding segments 42 are opaque such as to prevent sunlight from passing through the cladding segments 42 into the interior of the aerodrome structure 10. Referring to Figure 10, transparent PVC window panels 52 are provided, in the triangular openings formed by the inner ends of the Y-shaped stabilisation beams 32 and the upper ring 16, in order to allow sunlight into the aerodrome structure 10.

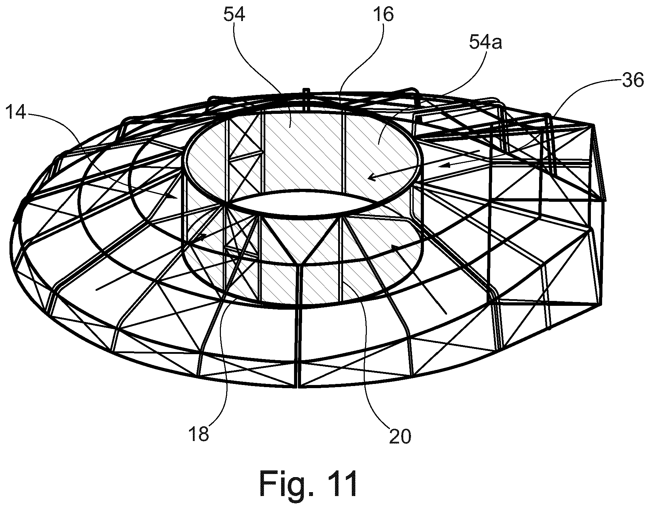

Referring to Figure 11, transparent PVC window panels 54 are also provided around the lift structure 14, the panels 54 being attached to the lift structure columns 20 and extending between the base ring 18 and the upper ring 16. These PVC window panels 54 allow views of the platform 12 and any aircraft thereon from positions within the interior of the aerodrome structure 10. A curtain portion 54a of the panels 54 allows for access through the above-mentioned side opening 30 of the lift structure 14, for loading and unloading aircraft on and off the platform 12.

It will be understood that some of the above-described assembly steps may be performed in a different order. For example, as described herein above, the inner ends of each of the lift structure columns 20, the Y-shaped stabilisation beams 32, the additional stabilisation beams 46, and the hanger structure roof members 40 of the pre-assembled hanger structure 36, are hingedly or pivotably connected to the upper ring 16. The lift apparatus 24 is then activated in order to raise the platform 12, and thereby the upper ring 16 which rests on the platform 12, vertically upward, thereby raising the lift structure columns 20, the Y-shaped stabilisation beams 32, the additional stabilisation beams 46, and the hanger structure roof members 40 and the hanger structure columns 38, which are all then locked into position relative to the upper ring 16 in order to provide a rigid structure.

In an alternative assembly procedure, only the lift structure columns 20 are hingedly or pivotably connected to the upper ring 16, raised into position, and subsequently locked into fixed connection with the upper ring 16. The lower ends of the lift structure columns 20 are then also fixedly connected to the base ring 18, as has been described herein above. In this way, the lift structure 14 is erected to form a rigid, free-standing structure with the upper ring 16 fixed in space at the top. The platform 12 is then lowered and the inner ends of one or more of the Y-shaped stabilisation beams 32, the additional stabilisation beams 46, and the hanger structure roof members 40 of the pre-assembled hanger structure 36, are rested on the platform 12 and temporarily attached thereto, for example using chains or ropes or the like. The platform 12 is then raised to the upper ring 16 and the inner ends of the Y-shaped stabilisation beams 32, the additional stabilisation beams 46, and the hanger structure roof members 40 are released from the platform 12 and fixedly connected (locked) to the upper ring 16. It will be understood that the platform 12 may be used to move all of these structural elements from the ground to the upper ring 16 either simultaneously or sequentially.

### Feature Details

Certain features of the aerodrome structure 10 will now be discussed in greater detail.

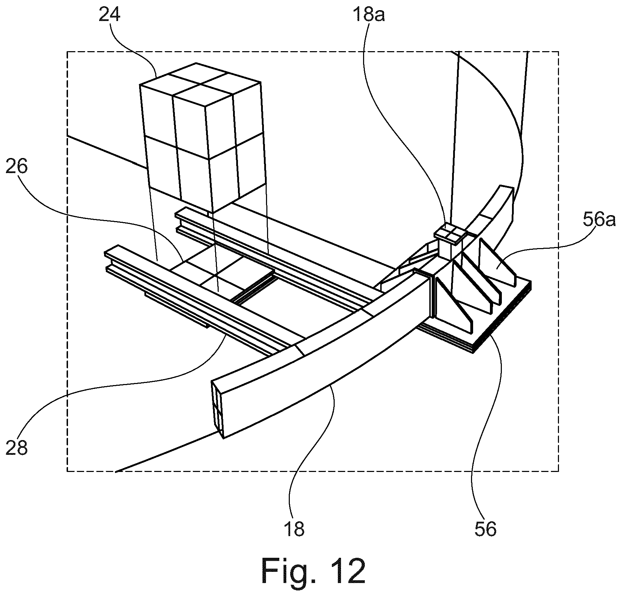

Referring to Figure 12, the base ring 18 may be firmly supported on the ground by a plurality of base ring support plates 56 (only one of which is shown in the drawing along with a portion of the base ring 18). Each of the base ring support plates 56 comprises upstanding buttress members 56a which form a channel for receiving and supporting a portion of the base ring 18. This portion of the base ring 18 includes an upstanding projection 18a for connection with a respective one of the upstanding lift structure columns 20, as has been described herein above. The base ring support plates 56 effectively increase the area of the "footprint" of the base ring 18, thereby spreading the load (weight) of the lift structure 14 over the ground. As has been mentioned herein above, the lift apparatus 24 supports the overlying platform (not shown in Figure 12) and is itself supported by the underlying rest plates 26 which are located on or between the base cross-beams 28. This underlying structure provides a firm supportive base for the lift apparatus 24 and the platform 12.

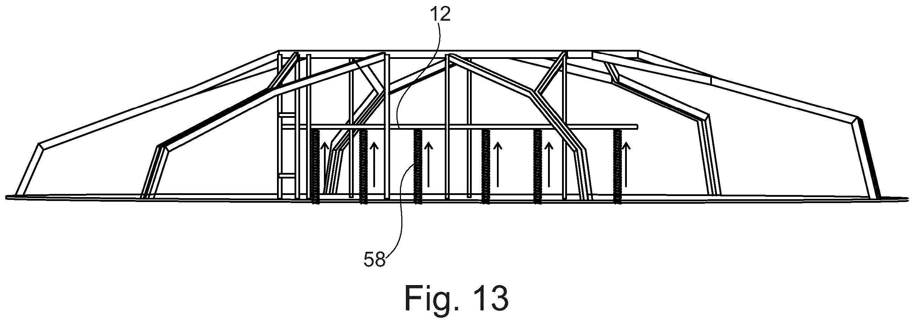

Referring also to Figure 13, the lift apparatus 24 itself comprises at least one lift mechanism and associated ancillary equipment including a power supply. The lift mechanism may be operated electrically or hydraulically, or a combination of these. The lift mechanism is preferably compact in order to minimise the space required beneath the platform 12. Suitable lift mechanisms include scissor lifts, telescopic lifts, and chain link lifts. Preferably, a plurality of lift mechanisms are provided at strategic locations beneath the platform 12 in order to spread the lifting force over the lower surface of the platform 12. The multiple lift mechanisms may be arranged to be synchronised using gearboxes and drive shafts. This example includes a plurality of chain link lifts 58, as shown in Figure 13. A chain link lift is a type of lift wherein a plurality of connected chain links are deployed outwardly and upwardly from a horizontal storage housing such as to form a rigid, vertical column. An example of a suitable chain link lift is that produced by Serapid (France), which is described as being an electromechanical telescopic actuator specifically designed for the vertical movement of heavy loads using rigid chain technology.

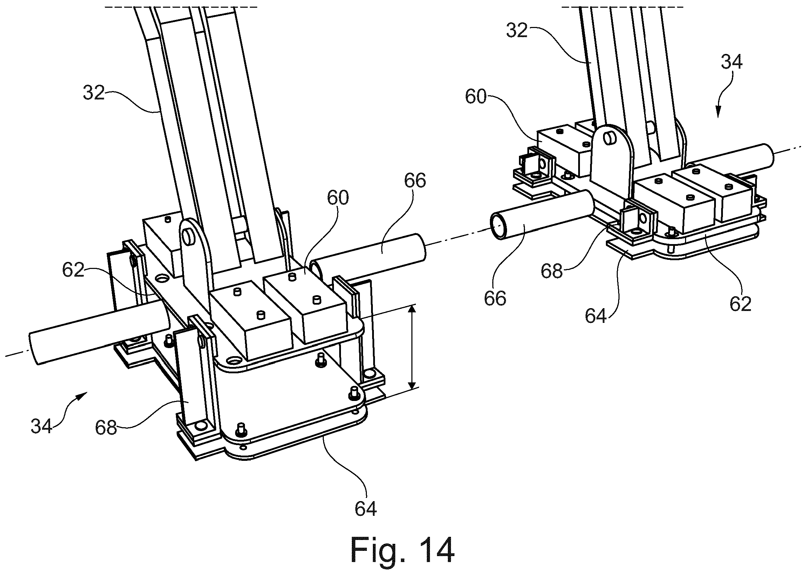

Figure 14 shows two of the anchor members 34 which support the Y-shaped stabilisation beams 32 at the outer periphery of the aerodrome structure 10. In this example, the anchor members 34 are configured to rest on the ground, rather than be sunk into the ground, thereby avoiding a need for digging conventional foundations. Each anchor member 34 comprises ballast units, for example comprising concrete blocks or water-filled containers, in order to provide sufficient weight to resist movement relative to the ground.

The anchor members 34 are configured to be height adjustable in order to accommodate non-level ground at the site where the aerodrome structure 10 is erected. In this way the need to first level the ground may be avoided. In this example, each anchor member 34 comprises an upper plate structure 62 which connects with the Y-shaped stabilisation beam 32, and a lower plate structure 64 which lies on the ground. The upper plate structure 62 comprises laterally-extending tubular members 66, each configured to receive an end of a telescopic rod (not shown in Figure 14) for connecting together the upper plate structures 62 of an adjacent two of the anchor members 34.

The upper and lower plate structures 62, 64 are connected to each other by upstanding struts, in this example T-shaped members 68, the height of which determines the vertical distance between the upper and lower plate structures 62, 64 and thereby the height from a ground datum of the Y-shaped stabilisation beams 32. The required heights of the T-shaped members 68 are predetermined by taking a survey of the ground at the site.

Thus, still referring to Figure 14, the anchor member 34 on the right side rests on a part of the ground that is higher than the piece of ground which supports the anchor member 34 on the left side. Accordingly, the heights of the T-shaped members 68 are selected so that the vertical distance, between the upper and lower plate structures 62, 64 of the left side anchor member 34, is greater than the vertical distance between the upper and lower plate structures 62, 64 of the right side anchor member 34. In addition, the lower plate structure 64 of each anchor member 34 is configured to be adjustable in tilt angle, in order to accommodate sloping ground underneath the lower plate structure 64.

In this way, the lower ends of the Y-shaped stabilisation beams 32 are positioned so as to lie in the same horizontal plane and therefore to be level with each other. It will be understood that the position of each anchor member 34 can be adjusted as required prior to locking the Y-shaped stabilisation beams 32 relative to the upper ring 16, as has been described herein above. With the lower ends of the Y-shaped stabilisation beams 32 in the desired position, adjacent pairs of the laterally-extending tubular members 66 may be connected together using the insertable telescopic rods, thereby providing additional bracing to the structure of the aerodrome structure 10 at ground level.

### Container Storage

As has been mentioned herein above, the component parts of the aerodrome structure 10 are originally packaged in containers, for example standard-size shipping containers, for convenient deployment to the site where the aerodrome structure 10 is to be erected. In order to minimise the number and volume of the containers, the component parts are preferably broken down into discrete segments or elements, as has been described, this being a highly space-efficient means of packaging the aerodrome structure 10.

The contents of the containers are preferably arranged to suit the order of assembly of the aerodrome structure 10, as discussed herein above. For example, the base ring 18 and the base cross-beams 28 are preferably provided in the same container, since the base cross-beams 28 are to be connected to the base ring 18 once the base ring 18 has been set out on the ground.

In one example, the aerodrome structure 10 is packaged in a total of eight containers, or container groups each comprising a plurality of individual containers, as follows:

| | |
|---|---|
| Container/container group 1: | The base ring 18 comprising its component segments; the upper ring 16 comprising its component segments; the rest plates 26; the base cross-beams 28 comprising their component segments; and the lift mechanism. |
| Container/container group 2: | The guide rails 22 comprising their component segments; and the lift structure columns 20 comprising their component segments and castor wheels. |
| Container/container group 3: | The Y-shaped stabilisation beams 32 comprising their component segments and castor wheels; and the additional stabilisation beams 46 comprising their component segments and castor wheels. |
| Container/container group 4: | The bracing members 48 comprising their component segments. |
| Container/container group 5: | The hanger structure roof members 40 comprising their component segments; and the hanger structure columns 38 comprising their component segments and castor wheels. |
| Container/container group 6: | The anchor members 34; and the telescopic rods. |
| Container/container group 7: | The cladding segments 42 (preferably folded or rolled-up) and their luff tracks 50; and the transparent PVC window panels 52, 54 (preferably folded or rolled-up). |
| Container/container group 8: | Ancillary equipment. |

Preferably, the containers include hoisting equipment to ease removal of the parts of the aerodrome structure 10 from the containers. The containers also preferably include wheels, so that they can be more easily moved by personnel to the exact location on-site where the parts are required for assembly.

### Disassembly

The aerodrome structure 10 may be disassembled or dismantled and removed from site, if it is no longer required. The disassembly sequence is essentially the reverse of the assembly sequence, as follows.

The platform 12 is raised to its upper position. The cladding segments 42 are each drawn upwardly and inwardly through their supporting luff tracks 50, for example by personnel using a winch located on the platform 12. Thus the cladding segments 42 are removed from the aerodrome structure 10. The transparent PVC window panels 52 are removed from the triangular openings at the inner ends of the Y-shaped stabilisation beams 32. The transparent PVC window panels 54 are removed from the lift structure 14.

The insertable telescopic rods are removed from the laterally-extending tubular members 66 of the anchor members 34. The bracing members 48 are disconnected and removed from the adjacent pairs of the Y-shaped stabilisation beams 32 and the additional stabilisation beams 46. The lower ends of the Y-shaped stabilisation beams 32 are disconnected from the anchor members 34.

The temporary stabilisation struts 44 are re-attached to the outer surfaces of the guide rails 22. The upper ends of the guide rails 22 are disconnected from the upper ring 16. The lower ends of the lift structure columns 20 are disconnected from the base ring 18.

The inner ends of the lift structure columns 20, the Y-shaped stabilisation beams 32, the additional stabilisation beams 46, and the hanger structure roof members 40, are unlocked so as to restore their pivotable relationship with the upper ring 16. Castor wheels are attached to the lower/outer ends of the lift structure columns 20, the Y-shaped stabilisation beams 32, and the additional stabilisation beams 46.

The lower ends of the pivotably-connected lift structure columns 20 are displaced outwardly (manually by personnel, or automatically, e.g. by a spring-loaded mechanism) in order to place them into a non-vertical condition. The lift apparatus 24 is activated in order to lower the platform 12. As the upper ring 16 descends vertically with the platform 12, the lift structure columns 20 freely rotate in a plane which is perpendicular with the plane of the upper ring 16. Thus, the lift structure columns 20 are pushed downward and outward, their inclination relative to the ground progressively decreasing. The pivotably-connected additional stabilisation beams 46 and hanger structure roof members 40 are similarly pushed downward and outward.

The lift apparatus 24 is deactivated in order to halt the downward movement of the platform 12 at the region of the base ring 18. In this lowered position of the platform 12, the lift structure columns 20, the Y-shaped stabilisation beams 32, the additional stabilisation beams 46, and the hanger structure roof members 40, slope downwardly from the upper ring 16 to the ground.

The temporary cross-member (or temporary inner lip part) is re-attached to the upper ring 16 in order to support the upper ring 16 on the platform 12. The inner ends of the lift structure columns 20, the Y-shaped stabilisation beams 32, the additional stabilisation beams 46, and the hanger structure roof members 40, are disconnected and removed from the upper ring 16. The temporary cross-member (or temporary inner lip part) is removed from the upper ring 16 and the segments of the upper ring 16 are separated from each other. The upper ring 16 is thus dismantled.

The temporary stabilisation struts 44 are removed from the guide rails 22. The guide rails 22 are disconnected from the platform 12 and the elements of the guide rails 22 are separated from each other. The guide rails 22 are thus dismantled.

The segments of the platform 12 are disconnected from each other, either before or after detachment from the lift apparatus 24. The lift apparatus 24 is removed from the rest plates 26. The rest plates 26 are removed from the base cross-beams 28. The ends of the base cross-beams 28 are detached from their respective portions of the base ring 18. The segments of the base ring 18 are separated from each other. The base ring 18 is thus dismantled.

The ends of the hanger structure columns 38 are disconnected from the respective ends of the hanger structure roof members 40. The relevant elements are disconnected from each other to dismantle the lift structure columns 20, the Y-shaped stabilisation beams 32, the additional stabilisation beams 46, the hanger structure columns 38, and the hanger structure roof members 40.

The component parts of the aerodrome structure 10 are put back into their containers. The containers are loaded onto vehicles and taken away from the site. If desired, the aerodrome structure 10 may be assembled once more at a different site.

### Variants

Some variants of the aerodrome structure and its structural parts will now be described.

In the above-described example, the pre-assembled platform 12 comprises a plurality of segments or elements, for ease of packaging, transportation and handling. Once assembled and integrated into the lift structure 14, the platform 12 is a single piece. In another example, however, the assembled and integrated platform 12 comprises two or more discrete pieces or parts. That is, the platform 12 is split, segmented, or partitioned. In such an example, the lift apparatus 24 is configured to operate the different parts of the platform 12 independently of each other. Thus, a first part of the platform 12 may be activated to be raised while at the same time a second part of the platform 12 may be activated to be lowered. Or, first and second parts of the platform 12 may be activated to be raised, or lowered, at the same time but at different velocities. Also in such an example, first and second parts of the platform 12 may be activated to as to be raised or lowered together at the same velocity, such that the two parts behave as though they were a single platform 12. Splitting the platform 12 into discrete parts in this manner advantageously increases flexibility with regard to aircraft handling.

In the above-described example, guide rails 22 are connected to the base ring 18 to enhance the lateral stability of the lift structure 14 and the platform 12 thereof. The guide rails 22 are particularly effective when used in combination with the plurality of chain link lifts 58, which also form part of the above-described example, since each of the chain link lifts 58 exerts a point load on a small portion of the platform 12. However, the guide rails 22 may be omitted in examples which comprise different lift mechanisms, for example a scissor lift, where the lifting force may be applied over a larger area of the platform 12. Furthermore, the guide rails 22 may even be omitted from examples which utilise chain link lifts 58, since the size and weight of the platform 12, and/or the number and positioning of the chain link lifts 58, may be such that the chain link lifts 58 themselves provide sufficient lateral stability to the platform 12. Thus it will be understood that the guide rails 22 (and of course the temporary struts 44 that may be used in conjunction with the guide rails 22) are an optional feature of the aerodrome structure of the disclosure.

While in the above-described example some of the structural elements of the aerodrome structure 10 comprise steel, in other examples different materials may be employed. These include, but are not limited to, metals and metal alloys, for example aluminium alloy or titanium alloy, plastics materials, composite materials such as carbon fibre, and wood, or any combination of these. Preferably the structural elements are lightweight, fire resistant, and corrosion resistant.

While in the above-described example the cladding segments 42 of the aerodrome structure 10 comprise PVC-coated polyester, in other examples different materials may be employed. These include, but are not limited to, metals and metal alloys, for example aluminium, plastics materials, composite materials such as carbon fibre, and wood, or any combination of these. Preferably the cladding segments 42 are flexible, lightweight, water resistant, fire resistant, and corrosion resistant.

While in the above-described example the anchor members 34 are rested on the ground, in other examples the anchor members 34 are partially or fully buried in the ground in order to support the Y-shaped stabilisation beams 32.

While in the above-described example the upper and base rings 16, 18 of the lift structure are circular in shape, in other examples the upper and base rings are non-circular, for example oval, elliptical, or rectangular, for example square.

While in the above-described example the cladding comprises a fabric material, in particular PVC-coated polyester, other examples may include different kinds of cladding. In one example, mounting tracks are attached to the upper surfaces or the undersides of the Y-shaped stabilisation beams 32 and/or the additional stabilisation beams 46. Click-on panels or screens are then pressed into the tracks so as to cover the aerodrome structure 10. The click-on methodology is less labour intensive and more time-efficient than other means of attachment such as screw fixings. It also requires no specialist skills or tools.

While in the above-described example the stabilisation beams 32 are Y-shaped, in other examples the beams have other shapes. For example, the stabilisation beams may be elongate and generally straight in plan view. Also, while in the above-described example the aerodrome structure 10 includes additional stabilisation beams 46, in other examples these are omitted. It will be understood that the aerodrome structure 10 may comprise any number and form of stabilisation beams, provided that the beams extend from the lift structure (preferably the upper ring thereof) to the ground, both in order to enhance lateral stability of the lift structure and also to provide a structure for supporting the external cladding which defines the interior volume of the aerodrome structure 10. The stabilisation beams may be of any suitable shape in cross-section, for example the classic I-beam cross-section as shown in Figure 8.

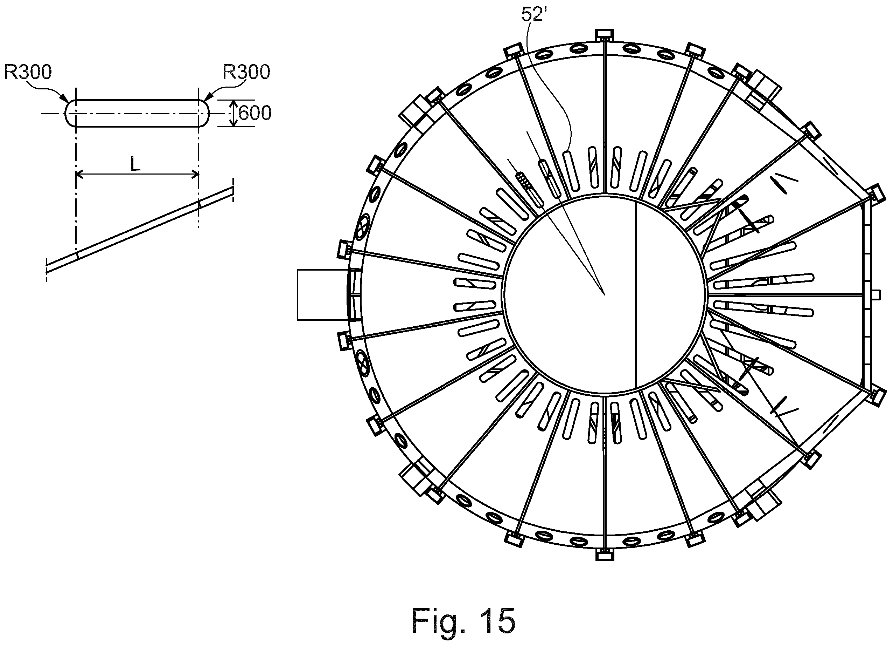

It will be understood that, in examples which comprise stabilisation beams having shapes other than Y-shapes, the transparent PVC window panels will take a different shape than that shown in Figure 10, due to an absence of the triangular apertures formed by the Y-shaped beams in the above-described example. In such examples, the transparent PVC window panels may take any other suitable shape. One example is shown in Figure 15, wherein the transparent PVC window panels 52' are generally elongate ovals which extend radially from the upper ring 16.

While the above-described example comprises cladding segments 42 which are opaque, such as to prevent sunlight from passing through the cladding segments 42 into the interior of the aerodrome structure 10, in other example the cladding segments 42 may be transparent or translucent, so as to allow sunlight to pass through the cladding segments 42 into the interior of the aerodrome structure 10. In such examples the cladding segments 42 may comprise one or more of the materials mentioned herein above. In some such examples, the transparent or translucent cladding segments 42 are used in conjunction with windows of the aerodrome structure 10, as have been described herein above. In other such examples, the windows are omitted.

While the above-described example comprises a hanger structure 36 including an entrance/exit for aircraft, in other examples the hanger structure 36 is omitted. In some such examples, one or more of the cladding segments 42 is configured to permit aircraft to enter and leave the interior of the aerodrome structure 10. For example, referring to Figure 1, a cladding segment 42a may be configured to be rotated about a hinge point at the upper ring 16, using powered hydraulic struts or the like, in order to lift the cladding segment 42a upward so as to form an opening in the side of the aerodrome structure 10.

It will be understood that the aerodrome structure has been described in relation to its preferred embodiments and may be modified in many different ways without departing from the scope defined by the accompanying claims.

### Detailed description of a terrain adjustable foot

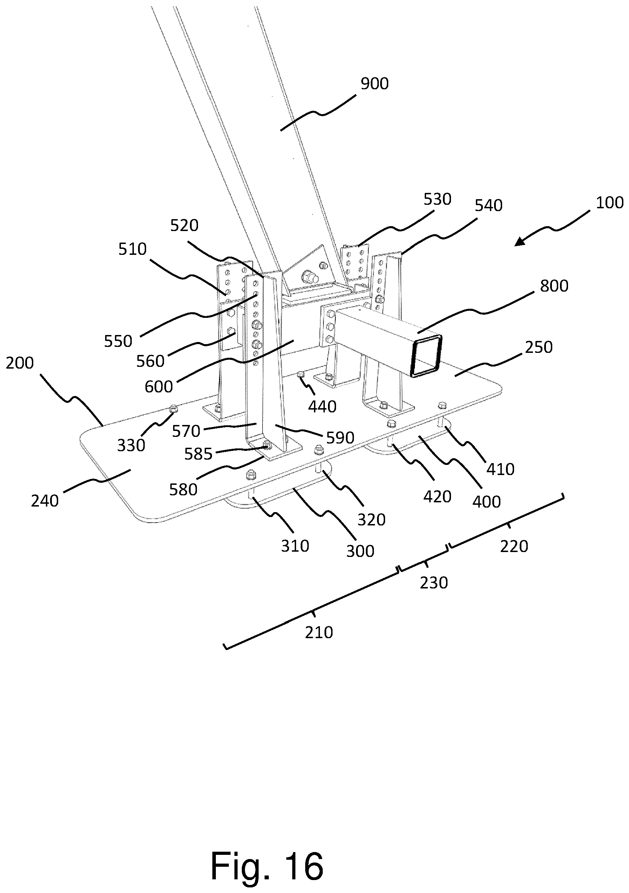

Figure 16 shows a foot 100 for supporting a piece of infrastructure, such as an aerodrome structure 10 in accordance with the disclosure. The foot may be used in place of the anchor 34 described above. The foot 100 may be applicable to any piece of infrastructure and is not limited to use in an aerodrome structure 10.

The foot 100 comprises a platform 200 having a first portion 210, a second portion 220 and a central portion 230 between the first portion 210 and the second portion 220. The first portion 210 comprises a first surface 240 and the second portion 220 comprises a second surface 250.

The foot 100 also comprises a first base 300 configured to support the first portion 210 and a second base 400 configured to support the second portion 220 of the platform.

The foot 100 comprises at least a first four rods 310, 320, 330, 340 that each extend between the first base 300 and the first portion 210. The first four rods 310, 320, 330, 340 each comprise a threaded rod configured for use with a corresponding nut in order to facilitate independent adjustment of each of the first four rods 310, 320, 330, 340. Independent adjustment means that it is possible that the length of a portion of each of the first rods that extends between the first base 300 and the first portion 210 may be different from that equivalent length for each of the other rods. In this way, the first base 300 may be non-parallel with the platform 200. Therefore, it is possible for the first base 300 to be resting on an incline but for the first portion 210 to be adjusted so as to be horizontal.

Similarly, the foot 100 comprises at least a second four rods 410, 420, 430, 440 that each extend between the second base 400 and the second portion 220. The second four rods 410, 420, 430, 440 each comprise a threaded rod for use with a corresponding nut in order to facilitate independent adjustment of each of the second four rods 410, 420, 430, 440. Independent adjustment means that it is possible that the length of a portion of each of the second rods that extends between the second base 400 and the first portion 220 may be different from that equivalent length for each of the other second rods. In this way, the second base 400 may be non-parallel with the platform 200 and non-parallel with the first base 300. Therefore, it is possible for the first base 300 to be resting on an incline but for the second portion 220 to be adjusted so as to be horizontal.

By adjusting the first base 300 and the second base 400 appropriately, using, respectively, the first four rods 310, 320, 330, 340 and the second four rods 410, 420, 430, 440, it is possible to adjust the platform 200 so as to be horizontal even when the first base 300 and the second base 400 are resting on inclines.

The foot 100 also comprises a first pair of legs 510, 520 projecting upwards from the first portion 210 of the platform 200 and a second pair of legs 530, 540 projecting upwards from the second portion 220 of the platform 200.

Each leg of the first and second pairs of legs 510, 520, 530, 540 may comprise a stem 570, a base 580, and a brace 590, extending between the stem 570 and the base 580. Each base 580 is parallel to the platform 200. In the illustrated embodiment, the base 580 of each leg is fastened to the platform using fixings 585.

The foot 100 further comprises a beam 600 having a first end and a second end. The first end is supported by the first pair of legs 510, 520 and the second end is supported by the second pair of legs 530, 540.

The first pair of legs 510 ,520 comprises a first range of attachment positions 550 for supporting the beam 600 at a first variety of vertical positions. The second pair of legs 530, 540 comprises a second range of attachment positions 550 for supporting the beam 600 at a second variety of vertical positions that correspond with the first variety of vertical positions. In this way, a height of the beam 600 is selectable by selecting one of the first variety of vertical positions and a corresponding one of the second variety of vertical positions in such a way that the beam 600 is parallel to the platform 200.

In the illustrated configuration the first range of attachment positions 550 and the second range of attachment positions 550 comprises a series of equally spaced apertures. The beam 600 comprises pairs of apertures that correspond with a pair of apertures of the attachment positions 550 of the legs 510, 520, 530, 540. In this way, the beam 600 may be positioned and fastened to a pair of apertures of the equally spaced apertures in accordance with a required height. To the extent that further, more precise, vertical adjustment is required, the first four rods 310, 320, 330, 340 and the second four rods 410, 420, 430, 440 may be adjusted in parallel so as to maintain horizontality of the platform 200 whilst enabling modest vertical adjustment of the platform 200.

The apertures of the attachment positions 550 and the apertures in the beam 600 may be connected by means of bolts or threaded bar with corresponding nuts.

The foot may be of steel, of composite material, or of any other suitable material. An underside of the first base 300 and an underside of the second base 400 may be of a material having a coefficient of friction that exceeds a friction threshold in order to avoid lateral movement of the feet 100. The material of the underside of the first base 300 and the underside of the second base 400 may further accommodate minor deformations so as to compensate for minor undulations in the surface on which the first base 300 and the second base 400 is supported.

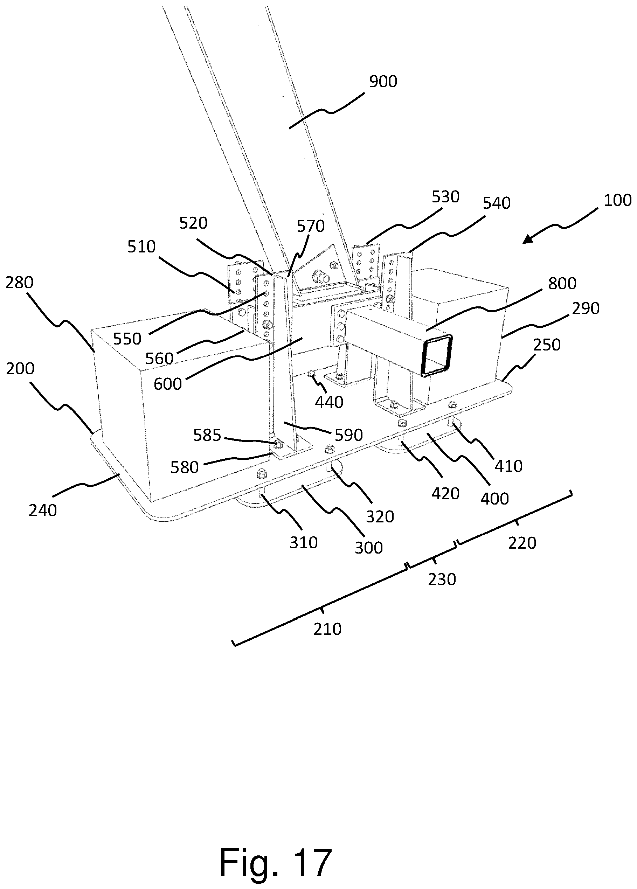

Figure 17 shows the foot 100 of Figure 16 deployed with first and second ballast elements 280, 290. The first ballast element 280 is supported by the first surface 240 and the second ballast element 290 is supported by the second surface 250. In this way, both the first pair of legs 510, 520 and the second pair of legs 530, 540 are disposed between the first and second ballast elements 280, 290.

The first surface 240 may cantilever from the first base 300 in a direction away from the central portion 230. The second surface 250 may cantilever from the second base 400 in a direction away from the central portion 230.

The ballast elements 280, 290 may be of concrete, of steel, or of any other material of sufficient density to reduce the risk of movement of the foot 100.

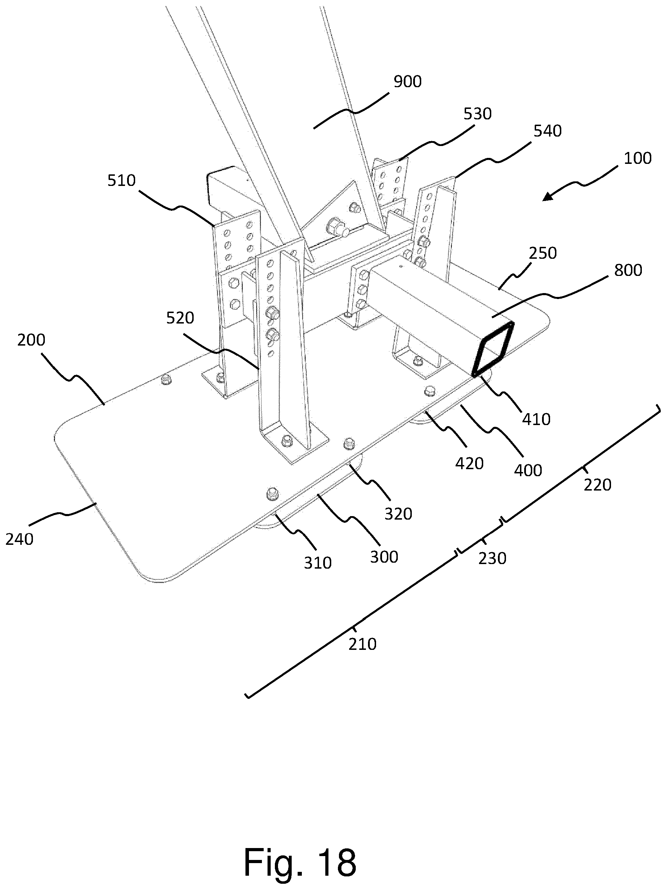

Figure 18 shows the foot of Figure 16 from a different perspective.

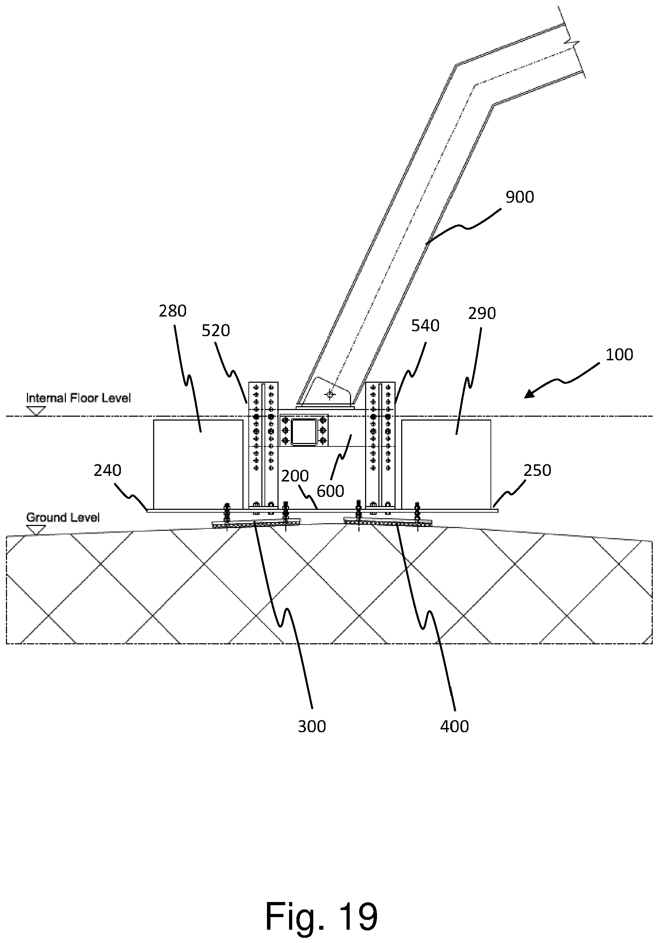

Figure 19 shows a side view of the foot of Figure 16 in situ on uneven ground. It can be seen that the first base 300 is on a first incline and the second base 400 is on a second incline different from the first incline. In this way, neither the first base 300 nor the second base 400 is horizontal yet the platform 200 is horizontal.

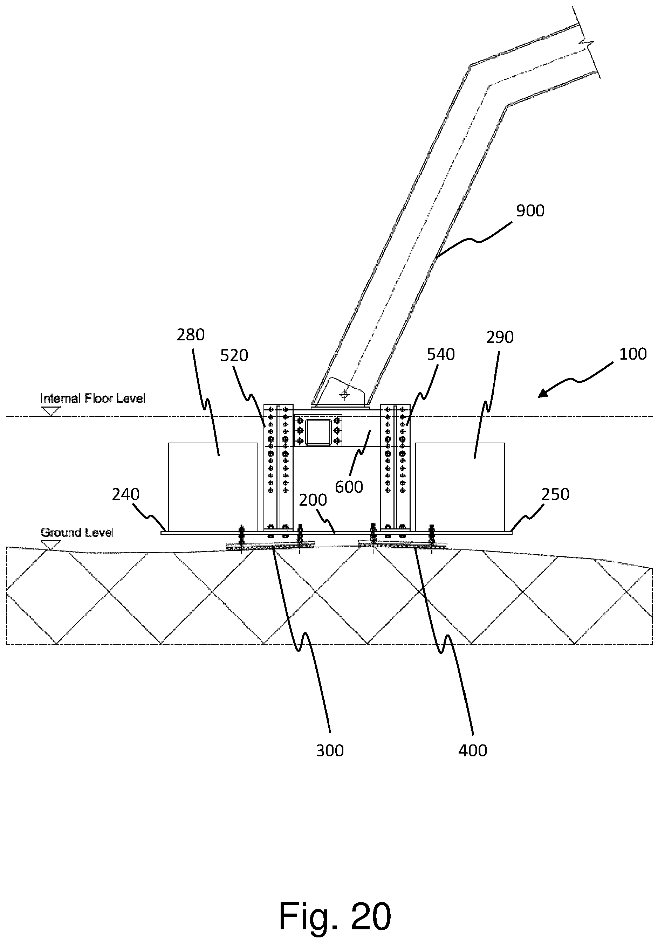

Figure 20 shows exactly the same components as Figure 19, but the first base 300 is on a third incline and the second base 400 is on a fourth incline different from the third incline. In this way, neither the first base 300 nor the second base 400 is horizontal yet the platform 200 is horizontal. Furthermore, it can be seen that the while the ground level shown in the Figure 19 embodiment is higher than the ground level shown in the Figure 20 embodiment, in each case the platform 200 is at a height consistent with the platform 200 of the other foot in the other Figure. This means that when the feet shown in Figures 19 and 20 are deployed in a single building, the floor level (consistent with the height of the beam 600) is horizontal between one foot and the other.

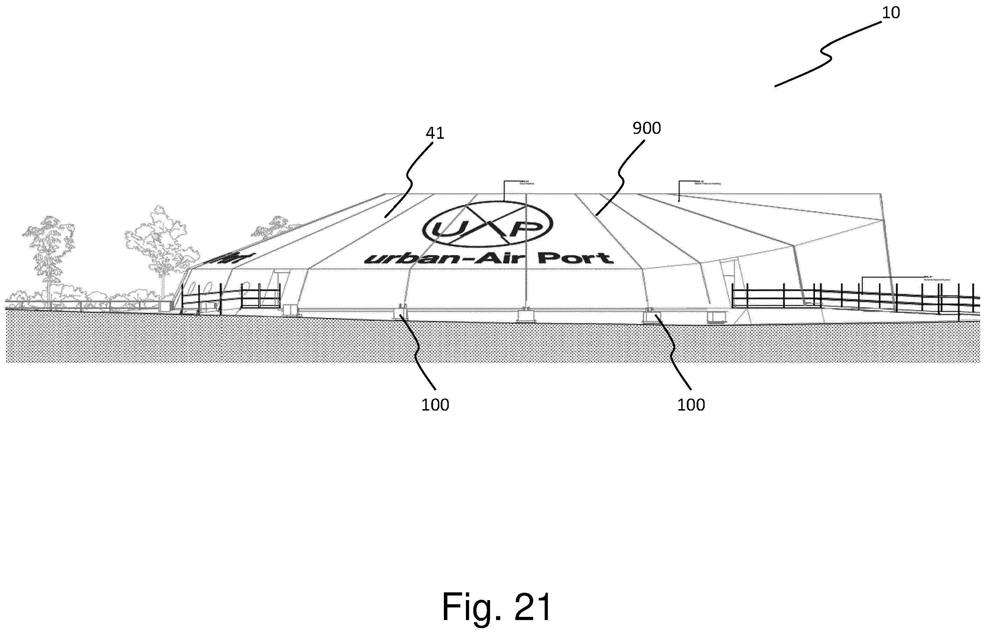

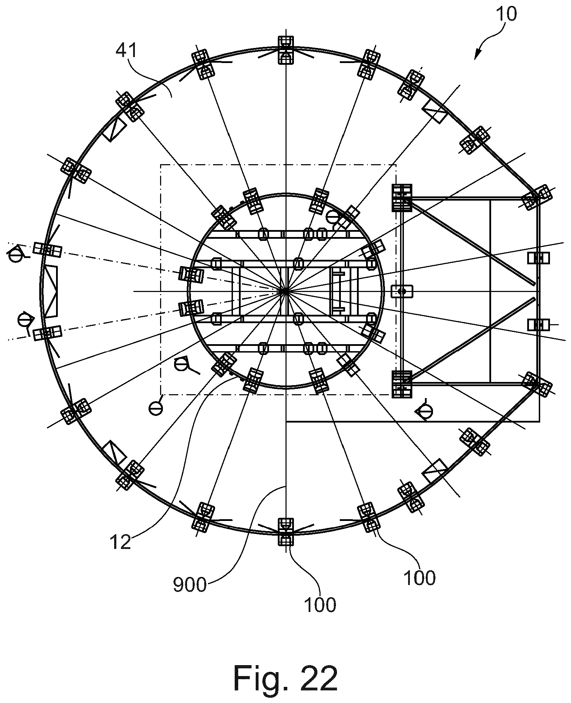

Figures 21 and 22 show a building 10, in a side view and in a plan view, respectively, that deploys the feet 100 of the present disclosure. The building 10 in question is an airport for vertical take of and landing vehicles, also known as a vertiport. The vertiport 10 comprises a FATO 12 (Final Approach and Takeoff area) having a circular perimeter that is surrounded by an annular enclosed space bounded by an outer ring defined by the feet 100 of the present disclosure and an inner ring at a perimeter of the FATO 12. The annular space may be covered with a roof structure 41.

Thus, the feet 100 of the present disclosure may be used to support a structure on uneven ground, not only across the area of the building, but also across the area of each individual foot. This, in turn, makes possible a horizontal floor of the structure notwithstanding it being deployed on an uneven ground. On the basis of such a horizontal structure, a horizontal platform for vertical take off and landing aircraft may be provided. Moreover, no penetration of the ground is required. In addition, the nature of the feet and the structure is such that assembly may be rapid and disassembly may be easily feasible and rapid, with straightforward return of the ground to its original state prior to deployment of the building.

## Claims

1. A lift structure (14) for an aerodrome structure (10), comprising:
an upstanding tubular frame comprising an upper ring (16) located over a base ring (18) and supported thereon by columns (20);
a platform (12) located within the tubular frame; and
a lift mechanism (24) arranged to raise and lower the platform (12) between the base ring (18) and the upper ring (16),
wherein:
the columns (20) are spaced apart from each other to provide a side opening (30) for loading an aircraft onto the platform (12) and unloading an aircraft therefrom when the platform (12) is in a lowered position; and
the platform (12) provides a take-off and landing pad for an aircraft when the platform (12) is in a raised position.

2. A lift structure (14) according to claim 1, comprising base support cross-members located within the base ring and connected thereto, the lift mechanism (24) being located beneath the platform (12) and supported by the base support cross-members.

3. A lift structure (14) according to claim 1 or 2, wherein:
the platform (12) comprises discrete first and second platform parts; and
the lift mechanism (24) is arranged to raise and lower the first and second platform parts independently of each other in one mode of operation;
wherein optionally the lift mechanism (24) is arranged to raise and lower the first and second platform parts together in another mode of operation; and
wherein optionally the lift mechanism (24) comprises at least one chain link lift located beneath the platform (12).

4. A lift structure (14) according to any of claims 1 to 3, comprising guide rails (22) extending between the base ring (18) and the upper ring (16), the platform (12) being movably connected to the guide rails (22), the lift mechanism (24) being arranged to raise and lower the platform (12) along the guide rails (22) between the base ring (18) and the upper ring (16).

5. An aerodrome structure (10), comprising:
a lift structure (14) according to any of claims 1 to 4;
a plurality of anchor members (34) located on the ground around the lift structure (14);
a plurality of radially-extending stabilisation members (32) each comprising a first end connected to the upper ring (16) and a second end connected to a respective one of the anchor members (34); and
a plurality of cladding segments (42) supported by the stabilisation members (32), each cladding segment (42) spanning a gap between an adjacent pair of the stabilisation members (32) and extending between the upper ring (16) and the second ends of said adjacent pair of the stabilisation members (32), thereby to define a covered interior volume of the aerodrome structure (10);
wherein optionally each of the cladding segments (42) comprises a fabric material; and
wherein optionally the fabric material comprises PVC-coated polyester.

6. An aerodrome structure (10) according to claim 5, wherein one or more of: the base ring (18); the platform (12); the guide rails (22); the upper ring (16); the columns (20); and the stabilisation members (32), comprises aluminium alloy or steel.

7. An aerodrome structure (10) according to any of claims 5 to 6, comprising a hanger structure for accommodating at least one aircraft and located adjacent to the side opening (30), for loading an aircraft onto the platform (12) and unloading an aircraft from the platform (12) when the platform is in the lowered position;
wherein optionally the hanger structure comprises hanger structure roof members connected to the upper ring (16) and upstanding hanger structure columns connected to the hanger structure roof members and to respective ones of the anchor members (34).

8. An aerodrome structure (10) according to any of claims 5 to 7, wherein the anchor members (34) are configured to be height adjustable in order to position the second ends of the stabilisation members (32) at the same height as each other from a ground datum.

9. A method of constructing the aerodrome structure (10) of any of claims 5 to 8, the method comprising:
providing the base ring (16) on the ground;
providing the lift mechanism (24) within the base ring (16);
attaching the platform (12) to the lift mechanism (24) such that the platform (12) is located above the lift mechanism (24);
providing the upper ring (16) on the platform (12);
pivotably connecting first ends of the columns to the upper ring (16) such that the columns are in spaced relationship with each other around the upper ring (16) and extend radially from the upper ring (16) toward the ground;
pivotably connecting the first ends of the stabilisation members (32) to the upper ring (16) such that the stabilisation members (32) are in spaced relationship with each other around the upper ring (16) and extend radially from the upper ring (16) toward the ground;
activating the lift mechanism (24) in order to raise the platform (12) and thus the upper ring (16) located thereon, thereby to draw the pivotably connected columns into a substantially vertical condition and the pivotably connected stabilisation members into an inclined condition with respect to the ground;
locking the first ends of the columns (20) and the first ends of the stabilisation members (32) into fixed relationship with the upper ring (16);
connecting second ends of the columns (20) to the base ring (18) so as to be in fixed relationship therewith;
providing the anchor members (34) on the ground and connecting the second ends of the stabilisation members (32) to the respective anchor members (34) so as to be in fixed relationship therewith; and
attaching the cladding segments (42) to the stabilisation members (32).

10. A method of constructing an aerodrome structure (10) according to claim 9, the method comprising adjusting the height of one or more of the anchor members (34) in order to position the second ends of the stabilisation members (32) at the same height as each other from a ground datum.

11. A method of constructing an aerodrome structure (10) according to claim 9 or 10, the method comprising:
before activating the lift mechanism (24) in order to raise the platform (12), connecting first ends of guide rails (22) to the base ring (18) such that the guide rails (22) extend upwardly from the base ring (18) and are in spaced relationship with each other around the base ring (18) and the platform (12); and
connecting the guide rails (22) to the platform (12) such as to allow height adjustment of the platform (12) relative to the guide rails (22);
and optionally comprising:
after activating the lift mechanism (24) in order to raise the platform (12), connecting second ends of the guide rails (22) to the upper ring (16) so as to be in fixed relationship therewith.

12. A method of constructing an aerodrome structure (10) according to any of claims 9 to 11, the method comprising assembling one or more of: the base ring (18); the platform (12); the guide rails (22); the upper ring (16); the columns (20); and the stabilisation members (32), from a plurality of discrete component parts.

13. A kit of parts for the lift structure (14) of any of claims 1 to 3, comprising:
a set of ring segments configured to be connected together to form the base ring (18);
a set of ring segments configured to be connected together to form the upper ring (16);
a plurality of sets of column segments, the segments of each set of column segments being configured to be connected together to form one of the columns (20), one of the segments in each set of column segments being configured to be connected to the base ring (18) and another of the segments in each set of column segments being configured to be connected to the upper ring (16);
a set of platform segments configured to be connected together to form the platform (12); and
a lift mechanism (24) configured to be connected to the platform (12).

14. A kit of parts according to claim 13 for the lift structure (14) of claim 4, comprising a plurality of sets of guide rail segments, the segments of each set of guide rail segments being configured to be connected together to form one of the guide rails (22), one of the segments in each set of guide rail segments being configured to be connected to the base ring (18), each of the guide rails being configured to be connected to the platform (12).

15. A kit of parts for the aerodrome structure (10) of any of claims 5 to 8, comprising:
a kit of parts according to claim 13 or 14;
a plurality of the anchor members (34);
a plurality of sets of stabilisation member segments, the segments of each set of stabilisation member segments being configured to be connected together to form one of the stabilisation members (32), at least one of the segments in each set of stabilisation member segments being configured to be connected to the upper ring (16) and another of the segments in each set of stabilisation member segments being configured to be connected to a respective one of the anchor members (34); and
a plurality of the cladding segments (42).

## Patentansprüche

1. Hebestruktur (14) für eine Flugplatzkonstruktion (10), umfassend:
einen aufrecht stehenden rohrförmigen Rahmen mit einem oberen Ring (16), der über einem Basisring (18) angeordnet ist und durch Säulen (20) darauf abgestützt ist;
eine innerhalb des rohrförmigen Rahmens angeordnete Plattform (12); und
einen Hebemechanismus (24), der eingerichtet ist, um die Plattform (12) zwischen dem Basisring (18) und dem oberen Ring (16) anzuheben und abzusenken,
wobei:
die Säulen (20) voneinander beabstandet sind, um eine seitliche Öffnung (30) zum Laden eines Flugzeugs auf die Plattform (12) und zum Abladen eines Luftfahrzeugs von dieser zu schaffen, wenn sich die Plattform (12) in einer abgesenkten Position befindet; und
die Plattform (12) eine Start- und Landeplattform für ein Luftfahrzeug bildet, wenn sich die Plattform (12) in einer angehobenen Position befindet.

2. Hebestruktur (14) nach Anspruch 1, mit Basisstützquerträgern, die innerhalb des Basisrings angeordnet und mit diesem verbunden sind, wobei der Hebemechanismus (24) unter der Plattform (12) angeordnet und von den Basisstützquerträgern getragen ist.

3. Hebestruktur (14) nach Anspruch 1 oder 2, bei der
die Plattform (12) diskrete erste und zweite Plattformteile umfasst; und
der Hebemechanismus (24) eingerichtet ist, um in einem Betriebsmodus die ersten und zweiten Plattformteile unabhängig voneinander anzuheben und abzusenken;
wobei optional der Hebemechanismus (24) eingerichtet ist, um in einem anderen Betriebsmodus die ersten und zweiten Plattformteile gemeinsam anzuheben und abzusenken; und
wobei optional der Hebemechanismus (24) mindestens einen Kettengliedheber umfasst, der unter der Plattform (12) angeordnet ist.

4. Hebestruktur (14) nach einem der Ansprüche 1 bis 3, mit Führungsschienen (22), die sich zwischen dem Basisring (18) und dem oberen Ring (16) erstrecken, wobei die Plattform (12) beweglich mit den Führungsschienen (22) verbunden ist und der Hebemechanismus (24) eingerichtet ist, um die Plattform (12) entlang der Führungsschienen (22) zwischen dem Basisring (18) und dem oberen Ring (16) anzuheben und abzusenken.

5. Flugplatzstruktur (10), umfassend:
eine Hebestruktur (14) nach einem der Ansprüche 1 bis 4;
eine Mehrzahl von Verankerungselementen (34), die auf dem Boden um die Hebestruktur (14) herum angeordnet sind;
eine Mehrzahl von sich radial erstreckenden Stabilisierungselementen (32), die jeweils ein erstes Ende, das mit dem oberen Ring (16) verbunden ist, und ein zweites Ende, das mit einem entsprechenden der Verankerungselemente (34) verbunden ist, umfassen; und
eine Mehrzahl von Verkleidungssegmenten (42), die von den Stabilisierungselementen (32) getragen sind,
wobei jedes Verkleidungssegment (42) eine Lücke zwischen einem benachbarten Paar der Stabilisierungselemente (32) überspannt und sich zwischen dem oberen Ring (16) und den zweiten Enden des benachbarten Paares der Stabilisierungselemente (32) erstreckt, um dadurch ein überdachtes Innenvolumen der Flugplatzstruktur (10) zu definieren;
wobei optional jedes der Verkleidungssegmente (42) ein Gewebematerial umfasst; und
wobei optional das Gewebematerial PVC-beschichtetes Polyester umfasst.

6. Flugplatzstruktur (10) nach Anspruch 5, bei der eines oder mehrere von Basisring (18), Plattform (12), Führungsschienen (22), oberem Ring (16), Säulen (20) und Stabilisierungselementen (32) eine Aluminiumlegierung oder Stahl umfasst.

7. Flugplatzstruktur (10) nach einem der Ansprüche 5 bis 6, umfassend eine Hangarstruktur zur Aufnahme mindestens eines Luftfahrzeugs, die benachbart zu der seitlichen Öffnung (30) angeordnet ist, um ein Luftfahrzeug auf die Plattform (12) zu laden und ein Luftfahrzeug von der Plattform (12) abzuladen, wenn sich die Plattform in der abgesenkten Position befindet;
wobei optional die Hangarstruktur Hangarstruktur-Dachelemente, die mit dem oberen Ring (16) verbunden sind, und aufrecht stehende Hangarstruktur-Säulen umfasst, die mit den Hangarstruktur-Dachelementen und mit jeweiligen der Verankerungselemente (34) verbunden sind.

8. Flugplatzstruktur (10) nach einem der Ansprüche 5 bis 7, bei der die Verankerungselemente (34) höhenverstellbar konfiguriert sind, um die zweiten Enden der Stabilisierungselemente (32) auf derselben Höhe zueinander von einem Bodenbezugspunkt aus zu positionieren.

9. Verfahren zum Bauen der Flugplatzstruktur (10) nach einem der Ansprüche 5 bis 8, wobei das Verfahren umfasst:
Bereitstellen des Basisrings (16) auf dem Boden;
Bereitstellen des Hebemechanismus (24) innerhalb des Basisrings (16);
Befestigen der Plattform (12) an dem Hebemechanismus (24), so dass sich die Plattform (12) über dem Hebemechanismus (24) befindet;
Bereitstellen des oberen Rings (16) auf der Plattform (12);
schwenkbares Verbinden erster Enden der Säulen mit dem oberen Ring (16), so dass die Säulen in einem Abstand zueinander um den oberen Ring (16) herum angeordnet sind und sich radial vom oberen Ring (16) bodenwärts erstrecken;
schwenkbares Verbinden der ersten Enden der Stabilisierungselemente (32) mit dem oberen Ring (16), so dass die Stabilisierungselemente (32) in einem Abstand zueinander um den oberen Ring (16) angeordnet sind und sich radial vom oberen Ring (16) bodenwärts erstrecken;
Aktivieren des Hebemechanismus (24), um die Plattform (12) und damit den darauf befindlichen oberen Ring (16) anzuheben, wodurch die schwenkbar verbundenen Säulen in eine im Wesentlichen vertikale Stellung und die schwenkbar verbundenen Stabilisierungselemente in eine geneigte Stellung gegenüber dem Boden gezogen werden;
Verriegeln der ersten Enden der Säulen (20) und der ersten Enden der Stabilisierungselemente (32) in einer festen Beziehung mit dem oberen Ring (16);
Verbinden von zweiten Enden der Säulen (20) mit dem Basisring (18), um in einer festen Beziehung mit diesem zu stehen;
Bereitstellen der Verankerungselemente (34) auf dem Boden und Verbinden der zweiten Enden der Stabilisierungselemente (32) mit den jeweiligen Verankerungselementen (34) in einer festen Beziehung zu diesen; und
Befestigen der Verkleidungssegmente (42) an den Stabilisierungselementen (32).

10. Verfahren zum Bau einer Flugplatzstruktur (10) nach Anspruch 9, wobei das Verfahren umfasst: Einstellen der Höhe eines oder mehrerer der Verankerungselemente (34), um die zweiten Enden der Stabilisierungselemente (32) von einem Bodenbezugspunkt aus auf miteinander gleicher Höhe zu positionieren.

11. Verfahren zum Bau einer Flugplatzstruktur (10) nach Anspruch 9 oder 10, wobei das Verfahren umfasst:
vor dem Aktivieren des Hebemechanismus (24) zum Anheben der Plattform (12):
Verbinden der ersten Enden der Führungsschienen (22) mit dem Basisring (18) derart, dass sich die Führungsschienen (22) vom Basisring (18) nach oben erstrecken und in einem Abstand zueinander um den Basisring (18) und die Plattform (12) angeordnet sind; und
Verbinden der Führungsschienen (22) mit der Plattform (12) derart, dass eine Höhenverstellung der Plattform (12) relativ zu den Führungsschienen (22) möglich ist;
und optional umfasst:
nach dem Aktivieren des Hebemechanismus (24), um die Plattform (12) anzuheben, Verbinden zweiter Enden der Führungsschienen (22) mit dem oberen Ring (16), so dass sie in einer festen Beziehung zu diesem stehen.

12. Verfahren zum Bau einer Flugplatzstruktur (10) nach einem der Ansprüche 9 bis 11, wobei das Verfahren umfasst: Zusammenbauen eines oder mehrerer von Basisring (18), Plattform (12), Führungsschienen (22), oberem Ring (16), Säulen (20) und Stabilisierungselementen (32) aus einer Mehrzahl von diskreten Bauteilen.

13. Teilesatz für die Hebestruktur (14) nach einem der Ansprüche 1 bis 3, umfassend:
einen Satz Ringsegmente, die konfiguriert sind, um miteinander verbunden zu werden, um den Basisring (18) zu bilden;
einen Satz Ringsegmente, die konfiguriert sind, um miteinander verbunden zu werden, um den oberen Ring (16) zu bilden;
eine Mehrzahl von Sätzen von Säulensegmenten, wobei die Segmente jedes Satzes von Säulensegmenten konfiguriert sind, um miteinander verbunden zu werden, um eine der Säulen (20) zu bilden, wobei eines der Segmente in jedem Satz von Säulensegmenten konfiguriert ist, um mit dem Basisring (18) verbunden zu werden, und ein anderes der Segmente in jedem Satz von Säulensegmenten konfiguriert ist, um mit dem oberen Ring (16) verbunden zu werden;
einen Satz Plattformsegmente, die konfiguriert sind, um miteinander verbunden zu werden, um die Plattform (12) zu bilden; und
einen Hebemechanismus (24), der konfiguriert ist, um mit der Plattform (12) verbunden zu werden.

14. Teilesatz nach Anspruch 13 für die Hebevorrichtung (14) nach Anspruch 4, umfassend eine Mehrzahl von Sätzen von Führungsschienensegmenten, wobei die Segmente jedes Satzes von Führungsschienensegmenten konfiguriert sind, um miteinander verbunden zu werden, um eine der Führungsschienen (22) zu bilden, wobei eines der Segmente in jedem Satz von Führungsschienensegmenten konfiguriert ist, mit dem Basisring (18) verbunden zu werden, wobei jede der Führungsschienen konfiguriert ist, um mit der Plattform (12) verbunden zu werden.

15. Teilesatz für die Flugplatzstruktur (10) nach einem der Ansprüche 5 bis 8, umfassend:
einen Teilesatz gemäß Anspruch 13 oder 14;
eine Mehrzahl der Verankerungselemente (34);
eine Mehrzahl von Sätzen von Stabilisierungselementsegmenten, wobei die Segmente jedes Satzes von Stabilisierungselementsegmenten konfiguriert sind, um miteinander verbunden zu werden, um eines der Stabilisierungselemente (32) zu bilden, wobei mindestens eines der Segmente in jedem Satz von Stabilisierungselementsegmenten konfiguriert ist, um mit dem oberen Ring (16) verbunden zu werden, und ein anderes der Segmente in jedem Satz von Stabilisierungselementsegmenten konfiguriert ist, um mit einem entsprechenden der Verankerungselemente (34) verbunden zu werden; und
eine Mehrzahl der Verkleidungssegmente (42).

## Revendications

1. Structure de levage (14) pour une structure d'aérodrome (10), comprenant :
un cadre tubulaire vertical comprenant un anneau supérieur (16) situé sur un anneau de base (18) et supporté sur celui-ci par des colonnes (20) ;
une plate-forme (12) située à l'intérieur du cadre tubulaire ; et
un mécanisme de levage (24) agencé pour lever et abaisser la plate-forme (12) entre l'anneau de base (18) et l'anneau supérieur (16), dans laquelle :
les colonnes (20) sont espacées les unes des autres pour fournir une ouverture latérale (30) pour charger un aéronef sur la plate-forme (12) et décharger un aéronef à partir de celle-ci lorsque la plate-forme (12) est dans une position abaissée ; et
la plate-forme (12) fournit une aire de décollage et d'atterrissage pour un aéronef lorsque la plate-forme (12) est dans une position levée.

2. Structure de levage (14) selon la revendication 1, comprenant des traverses de support de base situées à l'intérieur de l'anneau de base et connectées à celui-ci, le mécanisme de levage (24) étant situé sous la plate-forme (12) et supporté par les traverses de support de base.

3. Structure de levage (14) selon la revendication 1 ou 2, dans laquelle :
la plate-forme (12) comprend des première et seconde parties de plate-forme distinctes ; et
le mécanisme de levage (24) est agencé pour lever et abaisser les première et seconde parties de plate-forme indépendamment l'une de l'autre dans un certain mode de fonctionnement ;
dans laquelle facultativement le mécanisme de levage (24) est agencé pour lever et abaisser les première et seconde parties de plate-forme ensemble dans un autre mode de fonctionnement ; et
dans laquelle facultativement le mécanisme de levage (24) comprend au moins un élévateur à maillons de chaîne situé sous la plate-forme (12).

4. Structure de levage (14) selon l'une quelconque des revendications 1 à 3, comprenant des rails de guidage (22) s'étendant entre l'anneau de base (18) et l'anneau supérieur (16), la plate-forme (12) étant connectée de manière mobile aux rails de guidage (22), le mécanisme de levage (24) étant agencé pour lever et abaisser la plate-forme (12) le long des rails de guidage (22) entre l'anneau de base (18) et l'anneau supérieur (16).

5. Structure d'aérodrome (10), comprenant :
une structure de levage (14) selon l'une quelconque des revendications 1 à 4 ;
une pluralité d'éléments d'ancrage (34) situés sur le sol autour de la structure de levage (14) ;
une pluralité d'éléments de stabilisation s'étendant radialement (32) comprenant chacun une première extrémité connectée à l'anneau supérieur (16) et une seconde extrémité reliée à un certain respectif des éléments d'ancrage (34) ; et
une pluralité de segments de recouvrement (42) supportés par les éléments de stabilisation (32), chaque segment de recouvrement (42) recouvrant un espace entre une paire adjacente d'éléments de stabilisation (32) et s'étendant entre l'anneau supérieur (16) et les secondes extrémités de ladite paire adjacente d'éléments de stabilisation (32), afin de définir ainsi un volume intérieur couvert de la structure d'aérodrome (10) ;
dans laquelle facultativement chacun des segments de revêtement (42) comprend un matériau de tissu ; et
dans laquelle facultativement le matériau de tissu comprend du polyester revêtu de PVC.

6. Structure d'aérodrome (10) selon la revendication 5, dans laquelle un ou plusieurs parmi :
l'anneau de base (18) ;
la plateforme (12) ;
les rails de guidage (22) ;
l'anneau supérieur (16) ;
les colonnes (20) ; et
les éléments de stabilisation (32) comprennent un alliage d'aluminium ou de l'acier.

7. Structure d'aérodrome (10) selon l'une quelconque des revendications 5 à 6, comprenant une structure de suspension pour recevoir au moins un aéronef et située adjacente à l'ouverture latérale (30), pour charger un aéronef sur la plate-forme (12) et décharger un aéronef à partir de la plate-forme (12) lorsque la plate-forme est dans la position abaissée ;
dans laquelle facultativement la structure de suspension comprend des éléments de toit de structure de suspension connectés à l'anneau supérieur (16) et des colonnes de structure de suspension verticales connectées aux éléments de toit de structure de suspension et à certains respectifs des éléments d'ancrage (34).

8. Structure d'aérodrome (10) selon l'une quelconque des revendications 5 à 7, dans laquelle les éléments d'ancrage (34) sont configurés pour être ajustables en hauteur afin de positionner les secondes extrémités des éléments de stabilisation (32) à la même hauteur les uns par rapport aux autres à partir d'une référence au sol.

9. Procédé de construction de la structure d'aérodrome (10) selon l'une quelconque des revendications 5 à 8, le procédé comprenant les étapes consistant à :
fournir l'anneau de base (16) sur le sol ;
fournir le mécanisme de levage (24) à l'intérieur de l'anneau de base (16) ;
fixer la plate-forme (12) au mécanisme de levage (24) de telle sorte que la plate-forme (12) soit située au-dessus du mécanisme de levage (24) ;
fournir l'anneau supérieur (16) sur la plate-forme (12) ;
connecter de manière pivotante les premières extrémités des colonnes à l'anneau supérieur (16) de telle sorte que les colonnes soient en relation espacée les unes des autres autour de l'anneau supérieur (16) et s'étendent radialement à partir de l'anneau supérieur (16) vers le sol ;
connecter de manière pivotante les premières extrémités des éléments de stabilisation (32) à l'anneau supérieur (16) de telle sorte que les éléments de stabilisation (32) soient dans une relation espacés les uns des autres autour de l'anneau supérieur (16) et s'étendent radialement à partir de l'anneau supérieur (16) vers le sol ;
activer le mécanisme de levage (24) afin de lever la plate-forme (12) et donc l'anneau supérieur (16) situé sur celle-ci, pour ainsi tirer les colonnes connectées de manière pivotante dans un état sensiblement vertical et les éléments de stabilisation connectés de manière pivotante dans un état incliné par rapport au sol ;
verrouiller les premières extrémités des colonnes (20) et les premières extrémités des éléments de stabilisation (32) en relation fixe avec l'anneau supérieur (16) ;
connecter les secondes extrémités des colonnes (20) à l'anneau de base (18) de manière à être dans une relation fixe avec celui-ci ;
fournir les éléments d'ancrage (34) sur le sol et connecter les secondes extrémités des éléments de stabilisation (32) aux éléments d'ancrage respectifs (34) de manière à être dans une relation fixe avec ceux-ci ; et
fixer les segments de recouvrement (42) aux éléments de stabilisation (32).

10. Procédé de construction d'une structure d'aérodrome (10) selon la revendication 9, le procédé comprenant l'ajustement de la hauteur d'un ou plusieurs des éléments d'ancrage (34) afin de positionner les secondes extrémités des éléments de stabilisation (32) à la même hauteur les uns par rapport aux autres à partir d'une référence au sol.

11. Procédé de construction d'une structure d'aérodrome (10) selon la revendication 9 ou 10, le procédé comprenant les étapes consistant à :
avant d'activer le mécanisme de levage (24) afin de lever la plate-forme (12), connecter les premières extrémités des rails de guidage (22) à l'anneau de base (18) de sorte que les rails de guidage (22) s'étendent vers le haut à partir de l'anneau de base (18) et soient dans une relation espacée les uns des autres autour de l'anneau de base (18) et de la plate-forme (12) ; et
connecter les rails de guidage (22) à la plateforme (12) de manière à permettre un ajustement en hauteur de la plateforme (12) par rapport aux rails de guidage (22) ;
et comprenant facultativement l'étape consistant à :
après avoir activé le mécanisme de levage (24) afin de lever la plate-forme (12), connecter les secondes extrémités des rails de guidage (22) à l'anneau supérieur (16) de manière à être dans une relation fixe avec celui-ci.

12. Procédé de construction d'une structure d'aérodrome (10) selon l'une quelconque des revendications 9 à 11, le procédé comprenant un assemblage d'un ou plusieurs parmi :
l'anneau de base (18) ;
la plateforme (12) ;
les rails de guidage (22) ;
l'anneau supérieur (16) ;
les colonnes (20) ; et
les éléments de stabilisation (32), à partir d'une pluralité de pièces constitutives distinctes.

13. Kit de pièces pour la structure de levage (14) selon l'une quelconque des revendications 1 à 3, comprenant :
un ensemble de segments d'anneau configurés pour être connectés ensemble pour former l'anneau de base (18) ;
un ensemble de segments d'anneau configurés pour être connectés ensemble pour former l'anneau supérieur (16) ;
une pluralité d'ensembles de segments de colonne, les segments de chaque ensemble de segments de colonne étant configurés pour être connectés ensemble pour former une certaine des colonnes (20), un certain des segments de chaque ensemble de segments de colonne étant configuré pour être connecté à l'anneau de base (18) et un autre des segments de chaque ensemble de segments de colonne étant configuré pour être connecté à l'anneau supérieur (16) ;
un ensemble de segments de plate-forme configurés pour être connectés ensemble pour former la plate-forme (12) ; et
un mécanisme de levage (24) configuré pour être connecté à la plate-forme (12).

14. Kit de pièces selon la revendication 13 pour la structure de levage (14) de la revendication 4, comprenant une pluralité d'ensembles de segments de rail de guidage, les segments de chaque ensemble de segments de rail de guidage étant configurés pour être connectés ensemble pour former un certain des rails de guidage (22), un certain des segments de chaque ensemble de segments de rail de guidage étant configuré pour être connecté à l'anneau de base (18), chacun des rails de guidage étant configuré pour être connecté à la plate-forme (12).

15. Kit de pièces pour la structure d'aérodrome (10) selon l'une quelconque des revendications 5 à 8, comprenant :
un kit de pièces selon la revendication 13 ou 14 ;
une pluralité des éléments d'ancrage (34) ;
une pluralité d'ensembles de segments d'élément de stabilisation, les segments de chaque ensemble de segments d'élément de stabilisation étant configurés pour être connectés ensemble pour former un certain des éléments de stabilisation (32), au moins un certain des segments de chaque ensemble de segments d'élément de stabilisation étant configuré pour être connecté à l'anneau supérieur (16) et un autre des segments de chaque ensemble de segments d'élément de stabilisation étant configuré pour être connecté à un certain respectif des éléments d'ancrage (34) ; et
une pluralité des segments de recouvrement (42).
